# FASCICULE DE BREVET EUROPEEN

(11) **EP 3 510 105 B1**
(45) Date de publication et mention de la délivrance du brevet: **21.07.2021**
(21) Numéro de dépôt: 17780792.2
(22) Date de dépôt: 05.09.2017
(51) Int. Cl.: C08L 95/00

(54) **COMPOSITION BITUMINEUSE POUR ENROBES A MODULE ELEVE**
BITUMENZUSAMMENSETZUNG FÜR HOCHMODULARES BESCHICHTETES MATERIAL
BITUMENOUS COMPOSITION FOR HIGH-MODULUS COATED MATERIAL

(30) Priorité: 08.09.2016 FR 1658334
(43) Date de publication de la demande: 17.07.2019
(73) Titulaire: Total Marketing Services, 92800 Puteaux (FR)
(72) Inventeur: GAUTHIER, Gilles, 92500 Rueil-Malmaison (FR); MOUAZEN, Mouhamad, 92000 Nanterre (FR)
(74) Mandataire: Corizzi, Valérie
(86) Numéro de dépôt international: PCT/FR2017/052345
(87) Numéro de publication internationale: WO 2018/046836

(56) Documents cités:
- KR-A- 20040 001 331
- US-A1- 2004 094 454

## Description

### Domaine technique

La présente invention concerne le domaine des bitumes. Plus spécifiquement, elle concerne une composition bitumineuse permettant de fabriquer des enrobés à module élevé.

L'invention concerne également un enrobé bitumineux à module élevé et l'utilisation de ces enrobés, dans la préparation de chaussées routières, notamment dans la préparation de couches de base ou de couches d'assise pour chaussées routières.

L'invention concerne également un procédé de transport et/ou de stockage et/ou de manipulation de cette composition bitumineuse solide à température ambiante et sous forme divisée.

### Etat de la technique antérieure

De nombreux travaux ont porté sur l'amélioration des performances mécaniques des matériaux utilisés pour la construction de chaussées afin d'accroître leur résistance aux fortes sollicitations routières.

Plus particulièrement, il est connu l'utilisation de bitumes dits « durs » ou de « grade dur », c'est-à-dire des bitumes présentant une pénétrabilité mesurée à 25°C selon la norme EN 1426, inférieure à 35 1/10 mm, pour la fabrication d'enrobés à module élevé du fait des propriétés des bitumes durs présentant intrinsèquement un module de rigidité élevé en vue d'une mise en œuvre sur une chaussée devant résister aux fortes sollicitations routières.

Afin d'augmenter la dureté d'un bitume, il est connu de mélanger un bitume de grade défini avec un bitume de grade plus dur que le bitume de grade défini. Toutefois, ce procédé présente certaines limites : pour une augmentation significative de la dureté d'un bitume, on doit mettre en œuvre des bitumes de pénétrabilité très basse et en grandes quantités, typiquement des bitumes ayant une pénétrabilité à 25°C allant de 10 à 20 1/10 mm.

Néanmoins, l'approvisionnement en bitumes durs se raréfie du fait notamment de leur procédé de fabrication très spécifique qui ne permet d'en obtenir qu'en quantités limitées et nécessite de sélectionner des bruts spécifiques.

Il est également connu de rajouter des granules de bitume dur ou de la gilsonite à des bitumes mous pour en augmenter la dureté. Toutefois, la disponibilité de ces additifs est réduite et ne permet pas d'obtenir des bitumes présentant des propriétés satisfaisantes en termes de module.

Il est également connu de moduler les propriétés d'un bitume par application d'un traitement oxydant, tel qu'un soufflage d'air, qui augmente la dureté du bitume. En effet, les bitumes soufflés également appelés bitumes oxydés sont obtenus par soufflage d'air d'une base bitume à des températures allant de 240 à 320°C.

EP 1 352 031 enseigne une composition de bitume apte à l'utilisation dans la construction de routes, caractérisée en ce que la composition a un point de ramollissement de 50 à 75 ° C et comprend :
a) un bitume soufflé ayant une pénétrabilité à 25 ° C allant de 10 à 50 1/10 mm, une température de ramollissement Bille-Anneau (TBA) allant de 70 à 120 ° C et un indice de pénétration IP (norme européenne EN 12591 (1999), annexe B) dans la plage allant de 1,0 à 8,5, et
b) un asphalte précipité au solvant ayant une pénétration à 25 ° C allant de 0 à 40 1/10 mm.

L'utilisation de bitumes soufflés ne permet pas à elle seule la fabrication d'enrobés à module élevé.

FR 2 153 751 enseigne : d'une part de soumettre le résidu de la distillation sous vide d'un pétrole brut à un traitement d'oxydation. D'autre part de fractionner le résidu de la distillation sous vide d'un pétrole brut, identique ou non au précédent, en résidu désasphalté et en bitume de désasphaltage. On mélange une partie en poids du résidu oxydé et 0,5 à 2 parties en poids du bitume de désasphaltage ainsi obtenus, et enfin on ajoute à ce mélange un agent plastifiant approprié, de façon à ajuster la dureté du liant bitumineux à la valeur désirée. Toutefois, cette méthode suppose plusieurs opérations de traitement et de recomposition qui doivent être adaptées en fonction du brut d'origine.

Il est également connu de moduler les propriétés d'un bitume par mélange avec d'autres composants.

WO 2010/043945 décrit un enrobé bitumineux à module élevé à base de fraisats de recyclage de matériaux de chaussée comprenant du liant bitumineux résiduel, des granulats neufs et du liant bitumineux d'apport.

Néanmoins, cette composition est obtenue suite à plusieurs opérations de traitement et de recomposition. De telles opérations sont difficiles à mettre en œuvre dans certaines zones géographiques où les installations permettant de recycler les matériaux de chaussée sont rares voire inexistantes.

WO 2010/086561 décrit un enrobé bitumineux ou béton bitumineux à module élevé à base de liant bitumineux comprenant au moins un bitume et au moins une résine naturelle ou synthétique et des granulats.

US 2004/0094454 décrit des liants pétroliers comprenant un brai d'origine pétrolière et une fraction de bitume obtenue à partir d'une huile brute d'origine pétrolière.

KR 2004 0001331 décrit des compositions bitumineuses dont la résistance aux fissures et la résistance à l'écoulement à basse température sont améliorées. Ces compositions bitumineuses comprennent une base bitume et un brai d'origine pétrolière.

Toutefois, du fait de la difficulté liée à la disponibilité géographique et/ou à l'approvisionnement des additifs tels que la résine, ce type de composition ne peut pas être mis en œuvre à des coûts compétitifs dans toutes les zones de distribution où de telles compositions sont nécessaires.

Dès lors, il existe un besoin de fournir une composition bitumineuse présentant entre autres un module élevé répondant aux inconvénients de l'art antérieur cités ci-dessus. Plus particulièrement, il existe un besoin de fournir dans des quantités industrielles, une composition bitumineuse présentant un module élevé, satisfaisant pour sa mise en œuvre dans le domaine routier.

Par ailleurs, il a été mis en avant la raréfaction des bitumes durs présentant un module élevé dans certaines zones géographiques, comme par exemple dans la zone Afrique et Moyen-Orient, car de tels bitumes sont difficiles à manipuler car ils nécessitent d'être chauffés à haute température. Par conséquent, pour une utilisation dans ces zones géographiques, ils doivent être transportés, ce qui ne peut se faire que sous forme fondue, à chaud, ce qui pose des problèmes écologiques, économiques et de logistiques.

De manière générale, le bitume est stocké et transporté à chaud, en vrac, dans des camions-citernes ou par bateaux à des températures élevées de l'ordre de 120°C à 160°C. Or, le stockage et le transport du bitume à chaud présente certains inconvénients. D'une part, le transport du bitume à chaud sous forme liquide est considéré comme dangereux et il est très encadré d'un point de vue réglementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du bitume pourra augmenter durant un trajet trop long. Les distances de livraison du bitume sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et du stockage du bitume à chaud, des conditionnements permettant le transport et le stockage des bitumes à température ambiante ont été développés. Ce mode de transport du bitume en conditionnement à température ambiante ne représente qu'une fraction minime des quantités transportées dans le monde, mais il correspond à des besoins bien réels pour les régions géographiques d'accès difficile et coûteux par les moyens de transport traditionnels.

A titre d'exemple de conditionnement permettant le transport à froid utilisé actuellement, on peut citer le conditionnement du bitume à température ambiante dans des fûts métalliques. Ce moyen est de plus en plus contestable d'un point de vue environnemental car le bitume stocké dans les fûts doit être réchauffé avant son utilisation comme liant routier. Or, cette opération est difficile à mettre en œuvre pour ce type de conditionnement et les fûts constituent un déchet après utilisation. D'autre part, le stockage du bitume à température ambiante dans des fûts conduit à des pertes car le bitume est très visqueux et une partie du produit reste sur les parois du fût lors du transvasement dans les cuves des unités de production des enrobés. Quant à la manipulation et au transport de produits bitumineux dans ces fûts, ils peuvent s'avérer difficiles et dangereux si l'équipement spécialisé de manutention des fûts n'est pas disponible chez les transporteurs ou sur le lieu d'utilisation du bitume.

A titre d'autres exemples de conditionnement, on peut citer les bitumes sous forme de granules transportés et/ou stockés dans des sacs, souvent utilisés dans des endroits où la température ambiante est élevée. Ces granules présentent l'avantage d'être facilement manipulables. US 3 026 568 décrit des granules de bitume recouverts d'un matériau poudreux, tel que de la poudre de calcaire. Néanmoins, ce type de bitume en granules n'empêche pas le fluage du bitume, notamment à température ambiante élevée.

A titre d'autres exemples de conditionnement, on peut citer des compositions bitumineuses comprenant un additif chimique sous forme de blocs ou de granules décrites dans WO 2016/016318 et dans WO 2016/016320 permettant de transporter et/ou stocker et/ou manipuler le bitume à température ambiante

Néanmoins, selon les grades de bitume utilisés, soit les propriétés de module de certaines de ces compositions ne sont pas suffisamment satisfaisantes pour une mise en œuvre sur une chaussée devant résister à de très fortes sollicitations routières, soit il devient difficile d'obtenir dans des quantités industrielles des bitumes de grade dur permettant d'obtenir des enrobés à module élevé.

Il existe également un besoin de fournir une composition bitumineuse présentant entre autres un module élevé dont le transport et/ou le stockage et/ou la manipulation soit simplifié quelle que soit la zone géographique de sa mise en œuvre par rapport aux compositions bitumineuses décrites dans l'art antérieur.

La demanderesse a constaté que l'addition d'un brai particulier dans un bitume permettait d'obtenir dans des quantités industrielles, des bitumes durs présentant des propriétés de module très satisfaisantes permettant de résoudre de façon satisfaisante les problèmes évoqués ci-dessus.

Plus particulièrement, la demanderesse a démontré que de telles compositions présentant des propriétés de module très satisfaisantes pouvaient être facilement disponibles dans des quantités industrielles et sous une forme permettant de le transporter, de le stocker, de le manipuler à température ambiante, même à une température ambiante élevée. Dans ce cas, la composition bitumineuse proposée est sous forme divisée et solide à température ambiante de telle sorte qu'elle permette de résoudre de façon satisfaisante les problèmes évoqués ci-dessus.

### Résumé de l'invention

L'invention concerne une composition bitumineuse caractérisée en ce que la composition comprend :
a) de 2 à 30% en masse d'au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427, et
b) au moins une base bitume,
par rapport à la masse totale de la composition.

Selon un mode de réalisation préféré, le brai est un brai oxydé.

Selon un mode de réalisation préféré, la composition bitumineuse selon l'invention se présente sous forme solide à froid et sous une forme divisée.

Selon un mode de réalisation davantage préféré, la composition bitumineuse est solide à froid et sous forme divisée, et comprend en outre au moins un additif chimique choisi parmi un composé organique, une paraffine, un acide polyphosphorique et leurs mélanges.

Selon un mode de réalisation préféré, la composition bitumineuse comprend de 0,1% à 5% en masse, de préférence de 0,5% à 4% en masse, plus préférentiellement de 0,5% à 2,8% en masse, et encore plus préférentiellement de 0,5% à 2,5% en masse dudit additif chimique par rapport à la masse totale de la base bitume.

Selon un mode de réalisation préféré, l'additif chimique est un composé organique qui présente une masse molaire en masse inférieure ou égale à 2000 gmol⁻¹, de préférence une masse molaire inférieure ou égale à 1000 gmol⁻¹.

Selon un mode de réalisation préféré, la composition bitumineuse est sous forme de pain ou de granules.

L'invention concerne encore un procédé de fabrication d'une composition bitumineuse, ce procédé comprenant les étapes suivantes :
- Chauffage de la base bitume b) à une température allant de 140 à 180°C,
- Introduction du brai a) dans la base bitume b),
- Agitation du mélange à une température allant de 140 à 180°C jusqu'à l'obtention d'un mélange homogène.

Selon un mode de réalisation préféré du procédé, le brai est introduit sous forme de granules.

L'invention concerne aussi un kit susceptible d'être utilisé pour la fabrication d'une composition bitumineuse telle que définie ci-dessus, ce kit comprenant au moins :
- une base bitume solide à froid et sous forme divisée,
- une capsule comprenant au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427 sous forme de granule.

Selon un mode de réalisation préféré du kit, la base bitume solide à froid et sous forme divisée est sous forme de pain.

Selon un mode de réalisation préféré du kit, la base bitume solide à froid et sous forme divisée comprend sur une de ses faces, une cavité permettant de loger tout ou partie de la capsule.

Selon un mode de réalisation préféré du kit, la capsule est logée en tout ou partie dans ladite cavité de manière amovible.

L'invention a encore pour objet un procédé de préparation d'une composition bitumineuse solide à froid et sous forme divisée comprenant au moins une composition bitumineuse et au moins un additif chimique choisi parmi un composé organique, une paraffine, un acide polyphosphorique et leurs mélanges, le procédé comprenant :
- le mélange d'au moins une composition bitumineuse et d'au moins un additif chimique choisi parmi un composé organique, une paraffine, un acide polyphosphorique et leurs mélanges, pour former une composition bitumineuse additivée,
- la mise en forme de la composition bitumineuse additivée sous forme de pain ou de granules.

L'invention a encore pour objet un procédé de transport et/ou de stockage et/ou de manipulation de la composition bitumineuse solide à froid et sous forme divisée, ladite composition bitumineuse étant transportée et/ou stockée et/ou manipulée sous forme de pains ou de granules de composition bitumineuse solides à température ambiante.

L'invention concerne encore l'utilisation de la composition bitumineuse décrite ci-dessus et de façon détaillée ci-dessous pour la fabrication d'enrobés bitumineux ou de bétons bitumineux.

L'invention donne accès à des enrobés ou bétons bitumineux comprenant la composition bitumineuse décrite ci-dessus et de façon détaillée ci-dessous, et des granulats.

L'invention concerne également un procédé de fabrication d'enrobés bitumineux ou de bétons bitumineux comprenant au moins une composition bitumineuse et des granulats, la composition bitumineuse étant choisie parmi les compositions bitumineuses solides à froid et sous forme divisée, ce procédé comprenant au moins les étapes de :
- chauffage des granulats à une température allant de 100°C à 180°C,
- mélange des granulats avec la composition bitumineuse solide à froid et sous forme divisée dans une cuve telle qu'un malaxeur ou un tambour malaxeur,
- obtention d'enrobés.

Selon un mode de réalisation préféré, ce procédé ne comporte pas d'étape de chauffage de la composition bitumineuse solide à froid et sous forme divisée avant son mélange avec les granulats.

L'invention concerne en outre, l'utilisation d'un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427 pour augmenter le module d'une composition bitumineuse.

### Description détaillée

Les objectifs que la demanderesse s'est fixés ont été atteints grâce à la mise au point de compositions de bitume comprenant un brai particulier permettant d'atteindre des propriétés satisfaisantes pour les compositions bitumineuses destinées à être mises en œuvre pour des applications routières, notamment un module amélioré par rapport aux compositions bitumineuses connues de l'art antérieur.

Ils ont également été atteints grâce à la mise en œuvre de ces compositions bitumineuses sous une forme divisée et solide à température ambiante, conférant auxdites compositions des propriétés améliorées, notamment de module, permettant ainsi de les transporter et/ou de stocker et/ou de manipuler plus facilement par rapport aux compositions de bitumes connues de l'art antérieur.

Un premier objet de l'invention concerne une composition bitumineuse comprenant :
a) de 2 à 30% en masse d'au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427, et
b) au moins une base bitume,
par rapport à la masse totale de la composition.

L'invention concerne également un procédé de fabrication d'une composition de bitume telle que décrite ci-dessus et de façon plus détaillée ci-dessous, ce procédé comprenant les étapes suivantes :
- Chauffage de la base bitume b) à une température allant de 140 à 180°C,
- Introduction du brai a) dans la base bitume b),
- Agitation du mélange à une température allant de 140 à 180°C jusqu'à l'obtention d'un mélange homogène.

L'expression « compris entre X et Y » inclut les bornes. Cette expression signifie donc que l'intervalle visé comprend les valeurs X, Y et toutes les valeurs allant de X à Y.

Par « bitume », on entend toute composition bitumineuse constituée d'une ou de plusieurs bases bitumes, ladite composition étant destinée à une application routière.

Par « brai », on entend selon la présente invention, un résidu de distillation du pétrole.

Selon l'invention, la base bitume est chimiquement différente du brai utilisé. Dès lors, la base bitume et le brai ne peuvent pas être utilisés l'un en remplacement de l'autre car leurs caractéristiques chimiques sont différentes.

Par « pénétrabilité », on entend ici la mesure dite de « pénétrabilité à l'aiguille » qui est réalisée au moyen d'un test normalisé NF EN 1426 à 25°C (P25). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100g. La norme NF EN 1426 remplace la norme homologuée NF T 66-004 de décembre 1986 avec effet au 20 décembre 1999 (décision du Directeur Général d'AFNOR en date du 20 novembre 1999).

Par « point de ramollissement », on entend la mesure dite de « point de ramollissement » qui est réalisée au moyen d'un test normalisé NF EN 1427. Le point de ramollissement bille anneau correspond à la température à laquelle une bille d'acier de diamètre standard, après avoir traversé la matière à tester (collée dans un anneau), atteint le fond d'un vase standardisé rempli d'un liquide que l'on chauffe progressivement, et dans lequel on a plongé l'appareil.

Par « module », on entend la mesure définissant le rapport de l'amplitude de la contrainte sur l'amplitude de la déformation en oscillation sinusoïdale harmonique qui est réalisée au moyen d'un test normalisé NF EN 14770. Le module de la composition bitumineuse également appelé module complexe ou module de rigidité de la composition bitumineuse est déterminé au moyen d'un rhéomètre à cisaillement dynamique. Pour cela une série de déformations sinusoïdales de fréquences définies sont appliquées à l'échantillon maintenu à une température définie. Selon la norme NF EN 14770, le module complexe de la composition bitumineuse est déterminé pour une déformation sinusoïdale de fréquence comprise entre 0,1 et 10 Hz à une température allant de 5 à 85°C. Dans l'invention, le module complexe de la composition bitumineuse a été déterminé pour une déformation sinusoïdale de fréquence 10 Hz à une température de 15°C et également à une température de 60°C. Pour déterminer le module de la composition bitumineuse, la composition bitumineuse est placée entre deux plans parallèles, l'un fixe, l'autre mobile. Le montant supérieur impose la déformation de cisaillement, la déformation résultante est relevée.

Par « module des enrobés », on entend la mesure du module complexe de rigidité des enrobés bitumineux selon la norme NF EN 13108-1. Dans l'invention, le module complexe des enrobés bitumineux a été déterminé pour une déformation sinusoïdale de fréquence 10 Hz à une température de 15°C.

Selon un mode de réalisation de l'invention, le brai se présente sous forme de granulés avant son introduction dans la base bitume chauffée. Un tel mode de réalisation facilite la manipulation des composants et la mise en œuvre du procédé.

Selon un mode de réalisation de l'invention, le brai est un brai soufflé. Au sens de l'invention, on utilisera indépendamment l'un de l'autre, les termes « brai soufflé » et « brai oxydé ».

Selon l'invention, la composition bitumineuse comprend de 2 à 30% en masse de brai par rapport à la masse totale de la composition, de préférence de 3 à 20% en masse de brai par rapport à la masse totale de la composition.

L'expression «consiste essentiellement en » ou «est essentiellement constituée de » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

### Brai

Selon le dictionnaire français, on entend par « brai », un résidu de distillation des goudrons de pétrole, de pétrole, de houille, de bois ou d'autres molécules organiques.

L'invention porte ici sur les résidus de distillation du pétrole, également appelés « brai de pétrole ».

Au sens de l'invention, on utilisera indépendamment l'un de l'autre, les termes « brai », « brai de pétrole » et « brai de désasphaltage ».

Les brais peuvent être obtenus par des procédés conventionnels de fabrication en raffinerie. Le procédé de fabrication correspond à la succession d'une distillation atmosphérique et d'une distillation sous vide. Dans un premier temps, le pétrole brut est soumis à une distillation à pression atmosphérique, qui conduit à l'obtention d'une phase gazeuse, de différents distillats et d'un résidu de distillat atmosphérique. Puis, le résidu de la distillation atmosphérique est soumis lui-même à une distillation sous pression réduite, appelée distillation sous vide, qui permet de séparer un gazole lourd, diverses coupes de distillats et un résidu de distillation sous vide. Ce résidu de distillation sous vide contient du « brai de pétrole » en concentration variable.

Il est possible d'obtenir le « brai de pétrole » selon deux procédés :

### 1^{ère} procédé :

Le résidu de distillation sous vide est soumis à une opération de désalphatage par addition d'un solvant approprié, tel que le propane, qui permet ainsi de précipiter le brai et de le séparer des fractions légères telles que l'huile désaphaltée.

### 2^{nd} procédé :

Le résidu de distillation sous vide est soumis à une extraction au solvant, et plus précisément au furfural. Cet aldéhyde hétérocyclique présente la particularité de solubiliser sélectivement les composés aromatiques et polycycliques. Ce procédé permet ainsi d'éliminer les extraits aromatiques et de récupérer le « brai de pétrole ».

Selon un mode de réalisation, le brai est un brai oxydé.

De préférence, le brai oxydé selon l'invention est obtenu par oxydation d'un mélange comprenant du brai et un diluant, tel qu'une essence légère, également appelé « fluxant » soumis à une opération d'oxydation dans une tour de soufflage en présence d'un catalyseur, à une température fixée et à une pression donnée.

Par exemple, les brais oxydés peuvent être fabriqués dans une unité de soufflage, en faisant passer un flux d'air et/ou d'oxygène à travers un brai de départ. Cette opération peut être menée en présence d'un catalyseur d'oxydation, par exemple de l'acide phosphorique. Généralement, l'oxydation est réalisée à des températures élevées, de l'ordre de 200 à 300°C, pendant des durées relativement longues typiquement comprises entre 30 minutes et 2 heures, en continu ou par lots. La durée et la température d'oxydation sont ajustées en fonction des propriétés visées pour le brai oxydé et en fonction de la qualité du brai de départ.

Les qualités mécaniques des brais sont généralement appréciées en déterminant une série de caractéristiques mécaniques par des essais normalisés, dont les plus utilisés sont la pénétrabilité à l'aiguille exprimée en 1/10 mm et le point de ramollissement déterminée par l'essai bille et anneau, encore appelée température de ramollissement bille et anneau (TBA).

Selon l'invention, le brai présente une pénétrabilité à l'aiguille à 25°C de 0 à 20 1/10 mm, de préférence de 0 à 15 1/10 mm, plus préférentiellement de 0 à 10 1/10 mm, étant entendu que la pénétrabilité est mesurée selon la norme EN 1426.

Selon l'invention, le brai présente un point de ramollissement compris entre 115°C et 175°C. Parmi des exemples de brais utilisés dans l'invention, il y a des brais présentant respectivement un point de ramollissement compris entre 115°C et 125°C, entre 135 et 145°C ou encore entre 165 et 175°C.

L'ajout d'un brai avec les caractéristiques mécaniques présentées ci-dessus dans une composition bitumineuse permet d'améliorer les propriétés de module de ladite composition bitumineuse et également d'améliorer les propriétés de module des enrobés bitumineux. De plus, l'ajout du brai selon l'invention dans une composition bitumineuse permet de diminuer la pénétrabilité et d'augmenter la température de ramollissement bille-anneau de ladite composition bitumineuse tout en maintenant la viscosité de ladite composition bitumineuse par rapport à une composition bitumineuse sans brai.

Selon un mode de réalisation de l'invention, le brai est solide à froid et sous forme divisée. Cette forme facilite la manipulation du brai pour sa mise en œuvre dans la fabrication de la composition bitumineuse.

On entend par brai solide à froid et sous forme divisée, un brai solide à température ambiante qui est conditionné sous une forme divisée, c'est-à-dire sous forme d'unités distinctes les unes des autres, par exemple des granules.

Selon un mode de réalisation de l'invention, le brai solide à froid est sous forme de granules.

Les granules de brai selon l'invention peuvent avoir au sein d'une même population de granules, une ou plusieurs formes choisies parmi une forme cylindrique, sphérique ou ovoïde. Plus précisément, les granules de brai selon l'invention ont de préférence une forme cylindrique ou sphérique.

Selon un mode de réalisation de l'invention, la taille des granules de brai est telle que la dimension moyenne la plus longue est de préférence inférieure ou égale à 50 mm, plus préférentiellement de 2 à 30 mm. Par exemple, l'utilisation d'une filière permet de contrôler la fabrication de granules d'une taille choisie. Un tamisage permet de sélectionner des granules en fonction de leur taille.

Pour permettre la formation de granules de brai qui n'adhèrent pas entre elles et résistent à la compression lors de leur stockage, il peut être avantageux d'enrober en tout ou partie la surface des granules de brai d'un anti-agglomérant.

Le brai, sous forme de granulés éventuellement recouvert par un composé anti-agglomérant, est facilement manipulable après une durée de transport et/ou de stockage prolongée.

### Procédé de fabrication d'une composition bitumineuse :

L'invention a également pour objet un procédé de fabrication d'une composition bitumineuse comprenant au moins un brai a) et au moins une base bitume b), tels qu'ils ont été définis ci-dessus.

Ce procédé comprenant au moins les étapes de :
- Chauffage de la base bitume b) à une température allant de 140 à 180 °C,
- Introduction du brai a) dans la base bitume b),
- Agitation du mélange à une température allant de 140 à 180°C jusqu'à l'obtention d'un mélange homogène.

On a constaté de façon surprenante que le brai se mélange parfaitement à la base bitume. De façon avantageuse, le brai ne nécessite pas d'être chauffé, avant d'être ajouté à la base bitume.

Bien que le brai ait habituellement une température de fusion supérieure à 220°C, il se solubilise dans les bitumes aux températures habituelles de préparation des compositions bitumineuses. En revanche, les bitumes durs doivent être préalablement chauffés pour être incorporés dans une composition bitumineuse.

Le procédé de fabrication de la composition bitumineuse est facile à mettre en œuvre et ne nécessite pas de transporter à chaud sur de longues distances le brai destiné à améliorer les propriétés de la base bitume, contrairement aux bases bitumes de grade « dur » utilisées dans l'art antérieur.

De façon avantageuse, une base bitume produite dans la zone d'application peut être utilisée et ses propriétés améliorées par l'ajout du brai.

### Composition bitumineuse solide à froid et sous forme divisée

La composition bitumineuse selon l'invention peut se présenter sous forme solide à froid et sous une forme divisée.

Par « bitume solide à froid », on entend un bitume présentant un aspect solide à température ambiante quelles que soient les conditions de transport et/ou de stockage. Plus précisément, on entend par bitume solide à température ambiante, un bitume qui conserve son aspect solide tout au long du transport et/ou du stockage à température ambiante, c'est-à-dire un bitume qui ne flue pas à température ambiante sous son propre poids et de plus, qui ne flue pas lorsqu'il est soumis à des forces de pressions issues des conditions de transport et/ou de stockage.

Selon un mode de réalisation, la composition bitumineuse solide à froid et sous forme divisée comprend :
a) au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427,
b) au moins une base bitume, et
c) au moins un additif chimique.

Au sens de l'invention, la composition bitumineuse solide à froid et sous forme divisée est également appelée « composition bitumineuse additivée ».

Selon un mode de réalisation, la composition bitumineuse selon l'invention solide à froid et sous forme divisée comprend au moins un additif chimique choisi parmi : un composé organique, une paraffine, un acide polyphosphorique et leurs mélanges.

En particulier, la composition bitumineuse solide et sous forme divisée comprend au moins un additif chimique en une quantité adaptée pour que sa pénétrabilité soit de préférence de 5 à 70 1/10mm, de préférence de 10 à 60 1/10mm, étant entendu que la pénétrabilité est mesurée à 25°C selon la norme EN 1426.

Un autre objet concerne l'utilisation d'un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427 pour augmenter le module d'une composition bitumineuse.

### Base bitume

Au sens de l'invention, les termes « bitume » et « bitume routier » sont utilisés, de manière équivalente et indépendamment l'un de l'autre. Par « bitume » ou « bitume routier », on entend toutes compositions bitumineuses constituées d'une ou de plusieurs bases bitumes et comprenant éventuellement un ou plusieurs additifs chimiques et/ou un ou plusieurs élastomères, lesdites compositions étant destinées à une application routière.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes.

Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Selon l'invention, pour les procédés conventionnels de fabrication des bases bitumes, on opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Préférentiellement, la base bitume mise en œuvre dans l'invention présente une pénétrabilité à l'aiguille mesurée à 25°C selon la norme EN 1426 de 30 à 330 1/10 mm, de préférence de 30 à 220 1/10 mm.

Selon un mode de réalisation de l'invention, la base bitume peut également comprendre au moins un élastomère pour bitume connu tel que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO2007/058994, WO2008/137394 et par la demanderesse dans la demande de brevet WO11/013073.

De préférence, la composition bitumineuse comprend de 70% à 99,9% en masse de base bitume, par rapport à la masse totale de la composition bitumineuse, de préférence de 75% à 99,5%, encore plus préférentiellement de 80% à 99%.

Selon un mode de réalisation de l'invention, la composition bitumineuse comprend de 0,5% à 15% en masse, de préférence de 1% à 15% en masse, plus préférentiellement de 2% à 12% en masse d'élastomère par rapport à la masse totale de la composition bitumineuse.

### Additif

L'additif chimique est choisi parmi : un composé organique, une paraffine, un acide polyphosphorique et leurs mélanges.

Dans un mode de réalisation de l'invention, l'additif chimique est un composé organique. Avantageusement, le composé organique présente une masse molaire inférieure ou égale à 2000 gmol⁻¹, de préférence une masse molaire inférieure ou égale à 1000 gmol⁻¹.

Dans ce premier mode de réalisation, selon une première variante, le composé organique est un composé de formule générale (I) :

Ar1-R-Ar2 (I),

dans laquelle :
- Ar1 et Ar2 représentent indépendamment l'un de l'autre un noyau benzène ou un système de noyaux aromatiques condensés de 6 à 20 atomes de carbones, substitués par au moins un groupe hydroxyle, et
- R représente un radical divalent éventuellement substitué, dont la chaîne principale comprend de 6 à 20 atomes de carbone et au moins un groupe choisi parmi les fonctions amide, ester, hydrazide, urée, carbamate, anhydride.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-*tert*-butyl-4-hydroxyphényle.

De préférence, R est en position *para* par rapport à un groupe hydroxyle de Ar1 et/ou Ar2.

Avantageusement, le composé de formule (I) est le 2',3-bis[(3-[3, 5-di-*tert*-butyl-4-hydroxyphenyl]propionyl)]propionohydrazide.

Selon une seconde variante de ce premier mode de réalisation, le composé organique est un composé de formule générale (II) :

R-(NH)ₙCONH-(X)ₘ-NHCO(NH)ₙ-R' (II),

dans laquelle,
- les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
- le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ;
- n et m sont des entiers ayant une valeur de 0 ou 1 indépendamment l'un de l'autre.

Selon cette variante, lorsque l'entier m a une valeur de 0, alors les groupements R-(NH)ₙCONH et NHCO(NH)ₙ-R' sont liés de façon covalente par une liaison hydrazide CONH-NHCO. Le groupement R, ou le groupement R', comprend alors au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

Toujours selon cette variante, lorsque l'entier m a une valeur de 1, alors le groupement R, le groupement R' et/ou le groupement X, comprend au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.
De préférence, le groupement R et/ou R' comprend une chaîne hydrocarbonée aliphatique de 4 à 22 atomes de carbone, notamment, choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

De préférence, le groupement X représente une chaîne hydrocarbonée linéaire, saturée comprenant de 1 à 22 atomes de carbone. De préférence, le groupement X est choisi parmi les groupements C₂H₄, C₃H₆.

De préférence, le groupement X peut aussi être un groupement cyclohexyl ou un groupement phényl, les radicaux R-(NH)ₙCONH- et NHCO(NH)ₙ-R'- peuvent alors être en position ortho, méta ou para. Par ailleurs, les radicaux R-(NH)ₙCONH- et NHCO(NH)ₙ-R'- peuvent être en position cis ou trans l'un par rapport à l'autre. De plus, lorsque le radical X est cyclique, ce cycle peut être substitué par d'autres groupements que les deux groupements principaux R-(NH)ₙCONH- et -NHCO(NH)ₙ-R'.

De préférence, le groupement X comprend deux cycles de 6 carbones reliés par un groupement CH₂, ces cycles étant aliphatiques ou aromatiques. Dans ce cas, le groupement X est un groupement comportant deux cycles aliphatiques reliés par un groupement CH₂ éventuellement substitué comme par exemple : 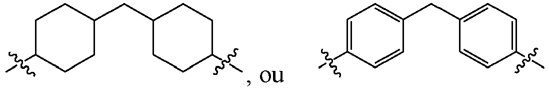 Avantageusement, selon cette variante, le composé organique est un composé de formule générale (II) choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que la N,N'-éthylènedi(stéaramide) de formule C₁₇H₃₅-CONH-CH₂-CH₂-NHCO-C₁₇H₃₅ ; et les dérivés uréides tels que la 4,4'-bis(dodécylaminocarbonylamino)diphénylmethane de formule C₁₂H₂₅-NHCONH-C₆H₄-CH₂-C₆H₄-NHCONH-C₁₂H₂₅.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R, X et R' est supérieur ou égal à 10, avantageusement supérieur ou égal à 14, de préférence supérieur ou égal à 18.

De préférence, le composé de formule générale (II) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

De préférence, selon une première variante, le composé de formule générale (II) est choisi parmi ceux de formule (IIA) :

R-CONH-(X)ₘ-NHCO-R' (IIA)

dans laquelle R, R', m et X ont la même définition que ci-dessus.

De préférence, dans la formule (IIA) lorsque m= 1, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements C₂H₄, C₃H₆.

De préférence, le composé de formule générale (IIA) est choisi parmi ceux qui satisfont à la condition : la somme des nombres des atomes de carbone de R, X et R' est supérieur ou égal à 10, avantageusement supérieur ou égal à 14, de préférence supérieur ou égal à 18.

De préférence, le composé de formule générale (IIA) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

Plus préférentiellement, selon cette variante, le composé de formule générale (IIA) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂.

De façon encore plus avantageuse, le composé de formule générale (IIA) est le N,N'-éthylènedi(stéaramide) de formule C₁₇H₃₅-CONH-CH₂-CH₂-NHCO-C₁₇H₃₅.

De préférence, selon une seconde variante, le composé de formule générale (II) est choisi parmi ceux de formule (IIB) :

R-CONH-R' (IIB)

dans laquelle R et R' ont la même définition que ci-dessus.

Avantageusement, selon cette variante, la somme des nombres des atomes de carbone de R et R' est supérieur ou égal à 10, avantageusement supérieur ou égal à 14, de préférence supérieur ou égal à 18.

Encore plus avantageusement, selon cette variante, le nombre des atomes de carbone de R est supérieur ou égal à 10, avantageusement supérieur ou égal à 12, de préférence supérieur ou égal à 14, et R' = H.

Avantageusement, le composé de formule générale (II) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂. De façon encore plus avantageuse, le composé de formule générale (II) est le N,N'-éthylènedi(stéaramide) de formule C₁₇H₃₅-CONH-CH₂-CH₂-NHCO-C₁₇H₃₅.

De préférence, lorsque l'additif chimique est choisi parmi les composés organiques de formule (II), il est utilisé en combinaison avec au moins un autre additif chimique choisi parmi les composés organiques de formule (I), (III), (V), (VI) et (VII) et les produits de réaction d'au moins un polyol en C3-C12 et d'au moins un aldéhyde en C2-C12, notamment ceux comprenant un groupement de formule (IV).

Selon une troisième variante de ce mode de réalisation, le composé organique est un composé de formule (III) :

(R-NHCO)ₓ-Z-(NHCO-R')_{y} (III),

dans laquelle,
- R et R', identiques ou différents, contiennent une chaîne hydrocarbonée saturée ou insaturée, linéaire, ramifiée ou cyclique comprenant de 1 à 22 atomes de carbone, éventuellement substituée, et éventuellement comprenant des hétéroatomes, des cycles et/ou des hétérocycles,
- Z représente un groupement tri-fonctionnalisé choisi parmi les groupements suivants : 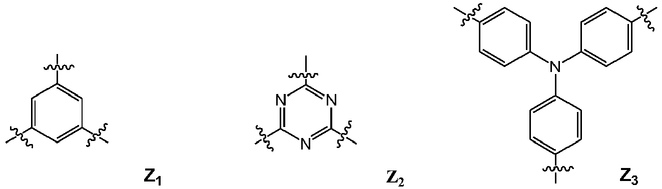
- x et y sont des entiers différents de valeur variant de 0 à 3 et tels que x+y=3.

De préférence, lorsque x est égal à 0 et Z représente Z₂, le composé de formule (III) est la N2, N4, N6-tridécylmélamine ayant la formule suivante avec R' représentant le groupe C₉H₁₉:

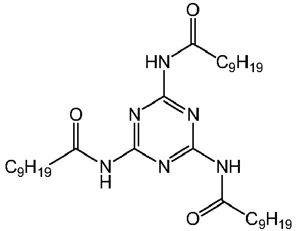

D'autres composés préférés répondant à la formule (III), sont tels que x est égal à 0, Z représente Z₂ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule (III) sont tels que : y est égal à 0 et Z représente Z₁, les composés ont alors pour formule : 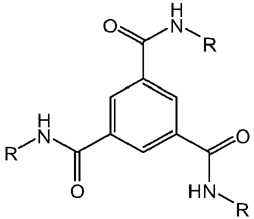 avec R choisi parmi les groupes suivants, pris seuls ou en mélanges :

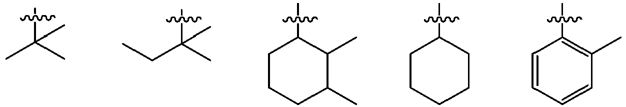

D'autres composés préférés répondant à la formule (III) sont tels que : y est égal à 0, Z représente Z₁ et R représente une chaîne hydrocarbonée saturée, linéaire, de 1 à 22 atomes de carbone, de préférence de 8 à 12 atomes de carbone.

Selon une quatrième variante de ce mode de réalisation, le composé organique est un produit de réaction d'au moins un polyol en C3-C12 et d'au moins un aldéhyde en C2-C12. Parmi les polyols utilisables, on peut citer le sorbitol, le xylitol, le mannitol et/ou le ribitol. De préférence, le polyol est le sorbitol.

Avantageusement, selon cette variante, le composé organique est un composé qui comprend au moins une fonction de formule générale (IV) : 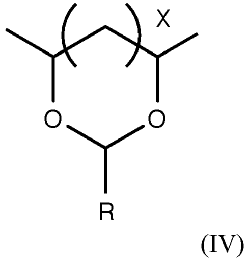 avec :
- x est un entier,
- R est choisi parmi un radical alkyle, alcényle, aryle, ou aralkyle en C1-C11, éventuellement substitué par un ou plusieurs atomes d'halogène, un ou plusieurs groupements alcoxy en C1-C6

Le composé organique est avantageusement un dérivé du sorbitol. Par « dérivé du sorbitol », on entend tout produit de réaction, obtenu à partir du sorbitol. En particulier, tout produit de réaction obtenu en faisant réagir un aldéhyde avec du D-sorbitol. On obtient par cette réaction de condensation, des acétals de sorbitol, qui sont des dérivés du sorbitol. Le 1,3:2,4-Di-O-benzylidène-D-sorbitol est obtenu en faisant réagir 1 mole de D-sorbitol et 2 moles de benzaldéhyde et a pour formule :

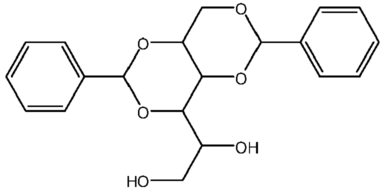

Les dérivés du sorbitol pourront ainsi être tous les produits de condensation d'aldéhydes, notamment d'aldéhydes aromatiques avec le sorbitol. On obtiendra alors des dérivés du sorbitol de formule générale : 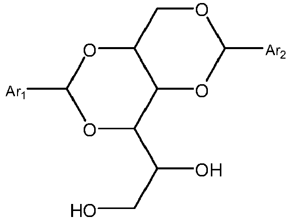 où Ar₁ et Ar₂ sont des noyaux aromatiques éventuellement substitués.

Parmi les dérivés du sorbitol, autre que le 1,3:2,4-Di-O-benzylidene-D-sorbitol on peut trouver par exemple le 1,3:2,4:5,6-tri-O-benzylidene-D-sorbitol, le 2,4-mono-O-benzylidene-D-sorbitol, le 1,3:2,4-bis(p-methylbenzylidene) sorbitol, 1,3:2,4-bis(3,4-dimethylbenzylidene) sorbitol, 1,3:2,4-bis(p-ethylbenzylidene) sorbitol, 1,3:2,4-bis(p-propylbenzylidene) sorbitol, 1,3:2,4-bis(p-butylbenzylidene) sorbitol, 1,3:2,4-bis(p-ethoxylbenzylidene) sorbitol, 1,3:2,4-bis(p-chlorobenzylidene) sorbitol, 1,3:2,4-bis(p-bromobenzylidene) sorbitol, 1,3:2,4-Di-O-methylbenzylidene-D-sorbitol, 1,3:2,4-Di-O-dimethylbenzylidene-D-sorbitol, 1,3:2,4-Di-O-(4-methylbenzylidene)-D-sorbitol, 1,3:2,4-Di-O-(4,3-dimethylbenzylidene)-D-sorbitol. De préférence, selon cette variante, le composé organique est le 1,3:2,4-Di-O-benzylidene-D-sorbitol.

Selon une cinquième variante de ce mode de réalisation, le composé organique est un composé de formule générale (V) :

R"-(COOH)z (V),

dans laquelle R" représente une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R" est une chaîne linéaire saturée de formule C_{w}H_{2w} avec w un entier variant de 4 à 22, de préférence de 4 à 12.

Selon cette variante de l'invention, les composés organiques répondant à la formule (V) peuvent être des diacides (z = 2), des triacides (z = 3) ou des tétracides (z = 4). Les composés organiques préférés selon cette variante, sont des diacides avec z = 2.

De préférence, selon cette variante, les diacides ont pour formule générale HOOC-C_{w}H_{2w}-COOH avec w un entier variant de 4 à 22, de préférence de 4 à 12 et où z = 2 et R" = C_{w}H_{2w}.

Avantageusement, selon cette variante, le composé organique est un diacide choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Plus avantageusement, le composé organique est l'acide sébacique ou acide 1,10-décanedioïque avec w = 8.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple).

De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné.

Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Selon une sixième variante de ce mode de réalisation, le composé organique est un composé de formule générale (VI) : 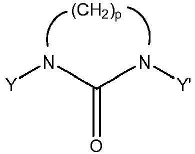 dans laquelle,
- les groupements Y et Y' représentent indépendamment l'un de l'autre, un atome ou groupement choisi parmi : H, -(CH₂)q-CH₃, -(CH₂)q-NH₂, -(CH₂)q-OH, - (CH₂)q-COOH ou 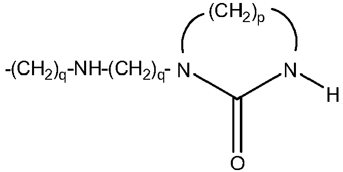
avec q un entier variant de 2 à 18, de préférence de 2 à 10, de préférence de 2 à 4 et p un entier supérieur ou égal à 2, de préférence ayant une valeur de 2 ou 3.

Parmi les composés organiques préférés répondant à la formule (VI), on peut citer les composés suivants :

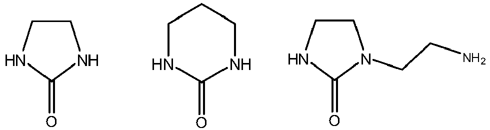

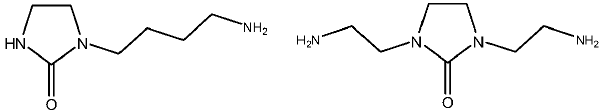

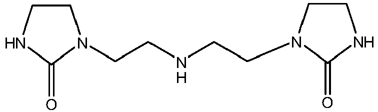

De préférence, selon cette variante, le composé organique de formule générale (VI) est :

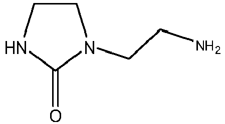

Selon une septième variante de ce mode de réalisation, le composé organique est un composé de formule générale (VII) :

R-NH-CO-CO-NH-R' (VII)

dans laquelle, R et R', identiques ou différents, représentent une chaîne hydrocarbonée saturée ou insaturée, linéaire, ramifiée ou cyclique, comprenant de 1 à 22 atomes de carbone, de préférence de 8 à 12 atomes de carbone, éventuellement substituée, et comprenant éventuellement des hétéroatomes, des cycles et/ou des hétérocycles.

Selon un autre mode de réalisation de l'invention, l'additif chimique est une paraffine. Les paraffines présentent des longueurs de chaînes de 30 à 120 atomes de carbone (C₃₀ à C₁₂₀). Les paraffines sont avantageusement choisies parmi les polyalkylènes.

De préférence, on utilisera selon l'invention des paraffines de polyméthylène et des paraffines de polyéthylène. Ces paraffines pourront être d'origine pétrolière ou provenir de l'industrie chimique.

Avantageusement, les paraffines utilisées sont des paraffines synthétiques issues de la conversion de la biomasse et/ou du gaz naturel.

De préférence, ces paraffines contiennent une grande proportion de paraffines dites « normales » c'est-à-dire de paraffines linéaires à chaîne droite, non ramifiées (hydrocarbures saturés). Ainsi, les paraffines peuvent comprendre de 50 à 100% de paraffines normales et de 0 à 50% d'isoparaffines et/ou de paraffines ramifiées. Plus préférentiellement, les paraffines comprennent de 85 à 95% de paraffines normales et de 5 à 15% d'isoparaffines et/ou de paraffines ramifiées. Avantageusement, les paraffines comprennent de 50 à 100% de paraffines normales et de 0 à 50% d'isoparaffines. Encore plus avantageusement, les paraffines comprennent de 85 à 95% de paraffines normales et de 5 à 15% d'isoparaffines.

De préférence, les paraffines sont des paraffines de polyméthylène. Plus particulièrement, les paraffines sont des paraffines synthétiques de polyméthylène, par exemple des paraffines issues de la conversion de gaz de synthèse par le procédé Fischer-Tropsch. Dans le procédé Fischer-Tropsch, les paraffines sont obtenues par réaction de l'hydrogène avec de l'oxyde de carbone sur un catalyseur métallique. Des procédés de synthèse Fischer-Tropsch sont décrits par exemple dans les publications EP 1 432 778, EP 1 328 607 ou EP 0 199 475.

Selon un autre mode de réalisation de l'invention, l'additif chimique est un acide polyphosphorique. Les acides polyphosphoriques (PPA) utilisables dans l'invention sont décrits dans WO 97/14753. Ce sont des composés de formule brute PqHrOs dans laquelle q, r et s sont des nombres positifs tels que :
q ≥ 2 et notamment q va de 3 à 20 ou plus et que 5q+r-2s=0.

En particulier, lesdits acides polyphosphoriques peuvent être des composés linéaires de formule brute P_{q}H_{(q+2)}O_{(3q+1)} correspondant à la formule développée : 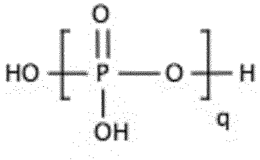 où q a la définition donnée ci-dessus. Ils peuvent encore être des produits de structure bidimensionnelle ou tridimensionnelle.

Tous ces acides polyphosphoriques peuvent être considérés comme des produits de polycondensation par chauffage de l'acide métaphosphorique aqueux.

On ne sortira pas du cadre de l'invention en combinant plusieurs additifs chimiques différents tels que différents composés organiques de formule (I), (II), (III), (V), (VI) et (VII), les produits de réaction d'au moins un polyol en C3-C12 et d'au moins un aldéhyde en C2-C12, notamment ceux comprenant un groupement de formule (IV), et/ou différentes paraffines et/ou différents acides polyphosphoriques dans la composition bitumineuse de l'invention.

Selon un mode de réalisation avantageux, la composition bitumineuse comprend au moins deux additifs chimiques.

Selon une première variante de ce mode de réalisation, la composition bitumineuse comprend au moins un premier additif chimique de formule (V) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique. De préférence, et selon cette première variante, la composition bitumineuse comprend au moins un premier additif chimique de formule (V) et au moins un second additif chimique de formule (II).

Plus préférentiellement, et selon cette première variante, la composition bitumineuse comprend au moins un premier additif de formule (V) et au moins un second additif chimique de formule (IIA).

De préférence, et toujours selon cette première variante, le premier additif chimique de formule (V) est choisi parmi les diacides (z=2), les triacides (z=3) et les tétracides (z=4), de préférence parmi les diacides (z=2).

Plus préférentiellement, et toujours selon cette première variante, le premier additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et selon cette première variante, le premier additif chimique de formule (V) est l'acide sébacique ou acide 1,10-décanedioïque avec w = 8.

Selon une seconde variante de ce mode réalisation, la composition bitumineuse comprend au moins un premier additif chimique de formule (II) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique. De préférence, et selon cette seconde variante, le premier additif chimique de formule (II) est choisi parmi les additifs chimiques de formule (IIA).

Plus préférentiellement, et selon cette seconde variante, la composition bitumineuse comprend au moins un premier additif chimique de formule (IIA) et au moins un second additif chimique choisi parmi : les additifs chimiques de formule (I) ; les additifs chimiques de formule (IIB) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique. Encore plus préférentiellement, et selon cette seconde variante, la composition bitumineuse comprend au moins un premier additif de formule (IIA) et au moins un second additif de formule (V).

Avantageusement, et selon cette seconde variante, le premier additif chimique de formule (IIA) est le N,N'-éthylènedi(stéaramide).

De préférence, et selon cette seconde variante, le second additif de formule (V) est choisi parmi les diacides (z=2), les triacides (z=3) et les tétracides (z=4), de préférence parmi les diacides (z=2).

Encore plus préférentiellement, et toujours selon cette seconde variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Selon une troisième variante de ce mode de réalisation, la composition bitumineuse comprend au moins de l'acide sébacique ou acide 1,10-décanedioïque et au moins du N,N'-éthylènedi(stéaramide).

Selon une quatrième variante de ce mode de réalisation, la composition bitumineuse comprend au moins un premier additif de formule (I) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV),, le second additif chimique étant distinct du premier additif chimique.

De préférence, et selon cette quatrième variante, le second additif chimique est choisi parmi les additifs chimiques de formule (II) et les additifs chimiques de formule (V). De préférence, et selon cette quatrième variante, le second additif chimique de formule (II) est choisi parmi les additifs chimiques de formule (IIA).

Plus préférentiellement, et selon cette quatrième variante, le second additif chimique de formule (II) est le N,N'-éthylènedi(stéaramide).

De préférence, et toujours selon cette quatrième variante, le second additif chimique de formule (V) est choisi parmi les diacides (z=2), les triacides (z=3) et les tétracides (z=4), de préférence parmi les diacides (z=2).

Encore plus préférentiellement, et toujours selon cette quatrième variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et toujours selon cette quatrième variante, le second additif chimique de formule (V) est l'acide sébacique ou acide 1,10-décanedioïque.

De préférence, et selon cette quatrième variante, le premier additif chimique de formule (I) est le 2',3-bis[(3-[3, 5-di-*tert*-butyl-4-hydroxyphenyl]propionyl)]propionohydrazide.

De préférence, et selon ce mode de réalisation, le ratio massique du premier additif chimique par rapport au second additif chimique est de 1 :99 à 99 : 1, de préférence de 1 :9 à 9 : 1, encore plus préférentiellement de 1 :5 à 5 : 1.

Selon un premier mode de réalisation de l'invention, la composition bitumineuse additivée comprend de 0,1% à 10% en masse, de préférence de 0,5% à 5% en masse, plus préférentiellement de 0,5% à 2,8% en masse, et encore plus préférentiellement de 0,5% à 2,5% en masse d'additif chimique par rapport à la masse totale de la composition bitumineuse.

Selon un autre mode de réalisation de l'invention, la composition bitumineuse additivée selon l'invention est une composition bitumineuse concentrée. Dans ce cas, avant sa mise en œuvre, par exemple dans une application décrite ci-dessous, la composition bitumineuse additivée concentrée est fondue puis diluée avec au moins une autre composition bitumineuse non additivée. Cette dilution est calculée pour atteindre une teneur en additif de 0,1% à 10% en masse, de préférence de 0,5% à 5% en masse, plus préférentiellement de 0,5% à 2,8% en masse, et encore plus préférentiellement de 0,5% à 2,5% en masse d'additif chimique par rapport à la masse totale de la composition bitumineuse.

Selon ce mode de réalisation, la composition bitumineuse additivée concentrée comprend de 5% à 30% en masse, de préférence de 6% à 28% en masse, plus préférentiellement de 7% à 26% en masse d"additif(s) chimique(s) par rapport à la masse totale de ladite base de la composition bitumineuse.

Selon un mode de réalisation de l'invention, la composition bitumineuse additivée peut en outre comprendre au moins un adjuvant polymère oléfinique.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B.
   Le monomère A est choisi parmi l'acétate de vinyle et les acrylates ou méthacrylates d'alkyle en C₁ à C₆.
   Le monomère B est choisi parmi l'acrylate de glycidyle et le méthacrylate de glycidyle.
   Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.
(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

Avantageusement, l'adjuvant polymère oléfinique est choisi parmi les terpolymères statistiques d'éthylène (b), d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation de l'invention, la composition bitumineuse comprend de 0,05% à 15% en masse, de préférence de 0,1% à 10% en masse, plus préférentiellement de 0,5% à 6% en masse de l'adjuvant polymère oléfinique par rapport à la masse totale de la composition bitumineuse.

Selon un mode de réalisation particulier, on prépare une composition bitumineuse solide à froid et sous forme divisée en mettant en contact :
- au moins une composition bitumineuse telle que définie ci-dessus,
- de 0,1% à 5% en masse, de préférence de 0,5% à 4% en masse, plus préférentiellement de 0,5% à 2,8% en masse, et encore plus préférentiellement de 0,5% à 2,5% en masse d'un moins un additif chimique choisi parmi un composé organique, une paraffine, un acide polyphosphorique et leurs mélanges,
les pourcentages étant donnés en masse rapportée à la masse totale de la composition bitumineuse.

Selon un autre mode de réalisation particulier, on prépare une composition bitumineuse concentrée solide à froid et sous forme divisée en mettant en contact :
- au moins une composition bitumineuse telle que définie ci-dessus,
- de 5% et 30% en masse, de préférence de 6% et 28% en masse, plus préférentiellement de 7% et 26% en masse d'au moins un additif chimique choisi parmi un composé organique, une paraffine, un acide polyphosphorique et leurs mélanges,
   les pourcentages étant donnés en masse rapportée à la masse totale de la composition bitumineuse.

Les quantités d'additif(s) chimique(s) et, éventuellement, de l'adjuvant polymère oléfinique sont ajustées en fonction de la nature de la composition bitumineuse utilisée.

### Procédé de transport et/ou de stockage et/ou de manipulation de la composition bitumineuse solide à froid et sous forme divisée

Un autre objet de l'invention concerne également un procédé de transport et/ou de stockage et/ou de manipulation de la composition bitumineuse solide à froid et sous forme divisée, ladite composition bitumineuse étant transportée et/ou stockée et/ou manipulée sous forme de pains ou de granules de composition bitumineuses solides à température ambiante, notamment à température ambiante élevée. La composition bitumineuse solide à froid et sous forme divisée est telle que décrite ci-dessus.

Par « température ambiante » ou « température ambiante élevée », on entend la température résultante des conditions climatiques dans lesquelles est transporté et/ou stocké le bitume. Plus précisément, la température ambiante équivaut à la température atteinte lors du transport et/ou du stockage et/ou de la manipulation du bitume, étant entendu que la température ambiante implique qu'aucun apport de chaleur n'est apporté autre que celui résultant des conditions climatiques.

De préférence, la composition bitumineuse additivée de l'invention est transportée et/ou stockée et/ou manipulée à une température ambiante pendant une durée supérieure ou égale à 2 mois, préférence à 3 mois.

Selon un mode de réalisation de l'invention, la composition bitumineuse additivée de l'invention est transportée et/ou stockée à une température inférieure à 100°C. En particulier, la température de transport et/ou de stockage et/ou de manipulation correspond à la température ambiante. On entend par température ambiante, la température qui est atteinte lors du transport et/ou de stockage de la composition bitumineuse selon l'invention sans que ladite composition bitumineuse soit chauffée par tout type de procédé. Ainsi, la température ambiante peut atteindre des températures élevées, inférieure à 100°C, durant les périodes estivales, en particulier dans les régions géographiques à climat chaud.

De préférence, la température ambiante élevée est inférieure à 100°C.

Avantageusement, la température ambiante élevée est de 20°C à 90°C, de préférence de 20°C à 80°C, plus préférentiellement de 30°C à 80°C.

Les compositions bitumineuses solides à froid et sous forme divisée selon la présente invention sont remarquables en ce qu'elles permettent le transport et/ou le stockage de composition bitumineuse à froid dans des conditions optimales, en particulier sans qu'il y ait fluage desdites compositions bitumineuses solides lors de leur transport et/ou le stockage, même lorsque la température ambiante est élevée et sans dégrader les propriétés de ladite composition bitumineuse, voire en les améliorant.

### Pain de bitume

Selon un mode de réalisation de l'invention, la composition bitumineuse solide à froid et sous forme divisée est sous forme de pain. Au sens de l'invention, la composition bitumineuse sous forme de pain est également appelée « pain de bitume ».

On entend par pain de bitume, un bloc de composition bitumineuse selon l'invention ayant une masse comprise entre 1 kg et 1000 kg, de préférence, entre 1 kg et 200 kg, plus préférentiellement entre 1 kg et 50 kg, encore plus préférentiellement entre 5 kg et 25 kg, encore plus préférentiellement entre 10 kg et 30 kg, ledit bloc étant avantageusement parallélépipédique, de préférence étant un pavé.

Le pain de bitume selon l'invention a, de préférence, un volume compris entre 1000 cm³ et 50000 cm³, de préférence entre 5000 cm³ et 25000 cm³, plus préférentiellement entre 10000 cm³ et 30000 cm³, encore plus préférentiellement entre 14000 cm³ et 25000 cm³.

Lorsque le pain de bitume est manipulé manuellement par une personne, la masse du pain de composition bitumineuse peut varier de 1 à 20 kg, et de 20 à 50 kg dans le cas d'une manutention par deux personnes. Lorsque la manutention est réalisée par des équipements mécaniques, la masse du pain de bitume peut varier de 50 à 1000 kg.

Le pain de bitume est fabriqué à partir de la composition bitumineuse additivée telle que décrite ci-dessus selon tout procédé connu industriellement, par exemple par extrusion, par moulage, ou selon le procédé de fabrication décrit dans le document US2011/0290695.

Le pain de bitume est avantageusement emballé d'un film thermofusible selon tout procédé connu, de préférence par un film en polypropylène, polyéthylène ou un mélange de polyéthylène et polypropylène. La composition bitumineuse conditionnée en pain de bitume emballé d'un film thermofusible présente l'avantage d'être prête à l'emploi c'est-à-dire qu'elle peut être directement chauffée dans le fondoir sans déballage préalable par exemple pour la fabrication d'émulsion ou éventuellement introduit directement dans l'unité d'enrobage de fabrication des enrobés. Le matériau thermofusible qui fond avec la composition bitumineuse additivée n'affecte pas les propriétés de ladite composition bitumineuse.

Le pain de bitume selon l'invention peut également être recouvert de composé anti-agglomérant tel que défini ci-dessus.

Dans cette variante, les préférences, les avantages, les différents modes de réalisation décrits pour les composés anti-agglomérants s'appliquent également.

Le pain de bitume selon l'invention peut également être conditionné dans un carton selon tout procédé connu.

En particulier, le pain de bitume selon l'invention est conditionné dans un carton en faisant couler à chaud la composition bitumineuse selon l'invention dans un carton dont la paroi de la face interne est siliconée puis refroidit, les dimensions du carton étant adaptées au poids et/ou volume du pain de bitume souhaité.

Lorsque le pain de bitume selon l'invention est emballé d'un film thermofusible ou est conditionné dans un carton, la demanderesse a démontré que la détérioration dudit film thermofusible ou dudit carton lors du transport et/ou du stockage à froid dudit pain de bitume selon l'invention n'entrainait pas le fluage de la composition bitumineuse. Par conséquent, les pains de bitume selon l'invention conservent leur forme initiale et ne collent pas entre eux lors de leur transport et/ou stockage à froid malgré le fait que le film thermofusible ou le carton soit endommagé. L'absence de fluage de la composition bitumineuse sous forme de pain lors de son transport et/ou stockage à froid est due à la présence d'au moins un additif chimique au sein de la composition bitumineuse.

### Granules de bitume

Selon un autre mode de réalisation de l'invention, la composition bitumineuse solide à froid et sous forme divisée est sous forme de granules. Au sens de l'invention, la composition bitumineuse sous forme de granules est également appelée « granules de bitume ».

Les granules de bitume selon l'invention peuvent avoir au sein d'une même population de granules, une ou plusieurs formes choisies parmi une forme cylindrique, sphérique ou ovoïde. Plus précisément, les granules de bitume selon l'invention ont de préférence une forme cylindrique ou sphérique.

La taille des granules de bitume peut varier selon le procédé de fabrication employé.

Selon un mode de réalisation de l'invention, la taille des granules de bitume est telle que la dimension moyenne la plus longue est de préférence inférieure ou égale à 50 mm, plus préférentiellement de 3 à 30 mm, encore plus préférentiellement comprise de 5 à 20 mm. Par exemple, l'utilisation d'une filière permet de contrôler la fabrication de granules d'une taille choisie. Un tamisage permet de sélectionner des granules en fonction de leur taille.

De préférence, les granules de bitume selon l'invention présentent un poids compris entre 0,1 g et 50 g, de préférence entre 0,2 g et 10 g, plus préférentiellement entre 0,2 g et 5 g.

Selon un autre mode de réalisation de l'invention, la taille des granules de bitume est telle que la dimension moyenne la plus longue est de préférence inférieure à 20 mm, plus préférentiellement inférieure à 10 mm, encore plus préférentiellement inférieure à 5 mm.

Les granules de bitume sont obtenus par mise en forme de composition bitumineuse additivée selon l'invention telle que décrite ci-dessus selon tout procédé connu, par exemple selon le procédé de fabrication décrit dans le document US 3 026 568, le document WO 2009/153324 ou le document WO 2012/168380. Selon un mode de réalisation particulier, la mise en forme des granules peut être réalisée par égouttage, en particulier à l'aide d'un tambour.

D'autres techniques peuvent être utilisées dans le procédé de fabrication des granules de composition bitumineuse, en particulier le moulage, l'extrusion, le pastillage...

Selon un mode de réalisation de l'invention, les granules de bitume comprennent en outre au moins un anti-agglomérant, de préférence d'origine minérale ou organique.

De préférence, les granules de bitume comprennent en outre entre 0,5% et 20% en masse, de préférence entre 2% et 20% en masse, plus préférentiellement entre 4% et 15% en masse de l'anti-agglomérant par rapport à la masse totale de la composition bitumineuse additivée desdites granules.

Dans ce mode de réalisation, les granules de bitume sont préparés à partir de la composition bitumineuse selon l'invention telle que définie ci-dessus, lesdites granules étant préparées en mettant en contact :
- une ou plusieurs compositions bitumineuses additivées selon l'invention,
- entre 0,1% et 5% en masse, de préférence entre 0,5% et 4% en masse, plus préférentiellement entre 0,5% et 2,8% en masse, et encore plus préférentiellement entre 0,5% et 2,5% en masse d'au moins un additif chimique choisi parmi un composé organique, une paraffine, un acide polyphosphorique et leurs mélanges, par rapport à la masse totale de la composition bitumineuse additivée desdites granules, et
- entre 0,5% et 20% en masse, de préférence entre 2% et 20% en masse, plus préférentiellement entre 4% et 15% en masse de l'anti-agglomérant par rapport à la masse totale de la composition bitumineuse additivée desdites granules.

Selon un mode de réalisation de l'invention, les granules de bitume sont recouverts sur au moins une partie de leur surface d'un anti-agglomérant, de préférence sur l'ensemble de leur surface.

De préférence, la masse de l'anti-agglomérant recouvrant au moins une partie de la surface des granules est comprise entre 0,2% et 10% en masse, de préférence entre 0,5% et 8% en masse, plus préférentiellement entre 0,5% et 5% par rapport à la masse totale de la composition bitumineuse additivée desdites granules.

Avantageusement, la masse de l'anti-agglomérant recouvrant au moins une partie de la surface des granules est d'environ 1% en masse par rapport à la masse totale de la composition bitumineuse additivée desdites granules.

De préférence, la couche d'anti-agglomérant recouvrant les granules de bitume selon l'invention est, de préférence, continue de façon à ce qu'au moins 90% de la surface desdites granules est recouverte d'un anti-agglomérant, de préférence au moins 95%, plus préférentiellement au moins 99%.

De préférence également, l'épaisseur moyenne de la couche d'anti-agglomérant est, de préférence, supérieure ou égale à 20 µm, plus préférentiellement comprise entre 20 et 100 µm.

Avantageusement, la couche d'anti-agglomérant doit être suffisamment épaisse pour que celle-ci soit continue.

Les granules de selon l'invention sont recouvertes de l'anti-agglomérant selon tout procédé connu, par exemple selon le procédé décrit dans le document US 3 026 568.

Par « anti-agglomérant » ou « composé anti-agglomérant », on entend tout composé qui limite, réduit, inhibe, retarde, l'agglomération et/ou l'adhésion des granules entre eux lors de leur transport et/ou de leur stockage à température ambiante et qui assure leur fluidité lors de leur manipulation.

De préférence, l'anti-agglomérant est choisi parmi le talc ; les fines généralement de diamètre inférieur à 125 µm à l'exception des fines calcaires, telles que les fines siliceuses ; le sable tel que le sable de fontainebleau ; le ciment ; le carbone ; les résidus du bois tels que la lignine, la lignosulfonate, les poudres d'aiguilles de conifères, les poudres de cônes de conifères, notamment de pin ; les cendres de balle de riz ; la poudre de verre ; les argiles telles que le kaolin, la bentonite, la vermiculite ; l'alumine telle que les hydrates d'alumine ; la silice ; les dérivés de silice tels que les fumées de silice, les fumées de silice fonctionnalisées, notamment les fumées de silice hydrophobe ou hydrophile, les silices pyrogénées, notamment les silices pyrogénées hydrophobes ou hydrophiles, les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

Avantageusement, l'anti-agglomérant est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; les fumées de silice, notamment les fumées de silice hydrophile et hydrophobe ; les silices pyrogénées, notamment les silices pyrogénées hydrophobes ou hydrophiles ; et leurs mélanges.

A titre d'exemple, l'anti-agglomérant peut être les fumées de silice. Les fumées de silice utilisées dans l'invention sont commercialement disponibles et par exemple peuvent être vendus par Evonik Degussa sous la marque AEROSIL®, comme par exemple l'AEROSIL®200, par Cabot Corporation sous les marques CAB-O-SIL® et CAB-O-SPERSE® ou encore par Wacker Chemie AG sous la marque HDK®.

De préférence, le composé anti-agglomérant est choisi parmi les fumées de silice.

Au sens de l'invention, les composés « fumée de silice », et « silice pyrogénée » ont la même définition chimique et sont enregistrés sous le même numéro CAS 112 945-52-5. Par conséquent, au sens de l'invention on peut employer ces composés indifféremment l'un de l'autre

Par « silice pyrogénée », on entend, soit une silice pyrogénée, soit un dérivé de silice pyrogénée.

Par « silice pyrogénée », on entend un composé obtenu par l'hydrolyse en phase vapeur de chlorosilanes tels que le tétrachlorure de silicium, dans une flamme d'oxygène et d'hydrogène. De tels procédés sont généralement désignés comme des procédés pyrogènes dont la réaction globale est : SiCl₄ + H₂ + O₂ → SiO₂ + 4 HCl.

Les silices pyrogénées se distinguent des autres dioxydes de silicium en ce qu'elles présentent une structure amorphe. De haute pureté (> 99,8 % en silice), elles présentent un faible caractère hydrophile (pas de microporosité).

De préférence, le composé de silice pyrogénée est la silice pyrogénée.

Selon un mode de réalisation de l'invention, le composé de silice pyrogénée présente une surface spécifique comprise entre 25 et 420 m²/g, préférentiellement entre 90 et 330 m²/g, plus préférentiellement entre 120 et 280 m²/g.

La surface spécifique de la silice pyrogénée définie en m²/g communément appelée « aire de surface » ou « SA » est mesurée selon la méthode de S. Brunauer, PH Emmet et I. Teller, J. Am. Chemical Society, 60: 309 (1938) (BET).

Selon un mode de réalisation de l'invention, le composé de silice pyrogénée présente une taille moyenne de particules comprise entre 5 et 50 nm.

Selon un mode de réalisation de l'invention, le composé de silice pyrogénée présente un pH compris entre 3 et 10 lorsqu'il est en phase aqueuse.

Selon un mode de réalisation de l'invention, le composé de silice pyrogénée présente une teneur de carbone comprise entre 0,1 et 10% en poids par rapport au poids total du composé de silice pyrogénée.

Selon un mode de réalisation de l'invention, le composé de silice pyrogénée est choisi parmi un composé de silice pyrogénée hydrophile, un composé de silice pyrogénée hydrophobe et leurs mélanges.

De préférence, le composé de silice pyrogénée est un composé de silice pyrogénée hydrophile.

Par « hydrophile », on entend un composé qui est miscible avec l'eau en toutes proportions.

Le composé de silice pyrogénée, ou dérivé de silice pyrogénée, utilisé au sens de l'invention peut être chimiquement modifié.

Différents types de composés de silice pyrogénée sont décrits dans les demandes de brevets suivants et peuvent être utilisés dans la présente invention :
- des silices pyrogénées silanisées, comme décrit dans WO 2004/020532, ou dans WO 2007/128636,
- des silices pyrogénées hydrophiles, comme décrit dans WO 2009/071467, WO 2011/000133 déposés au nom de Degussa AG ou Degussa Gmbh,
- des fumées de silice rendues hydrophobes par un traitement au moyen de polysiloxanes comme décrit dans WO 2008/141932, ou par silanisation comme décrit dans WO 2008/141930,
- des silices dopées par de l'oxyde de potassium comme décrit dans WO 2008/043635, WO 2008/022836,
- des silices sous forme d'agrégats de particules primaires comme décrit dans WO 2009/015969 déposé au nom de Evonik Degussa Gmbh ou dans WO 2010/028261 déposé au nom de Cabot Corporation.

Le composé de silice pyrogénée peut être mis en œuvre seul ou sous forme d'un mélange au sein d'une composition de revêtement.

Qu'il soit mis en œuvre seul ou en mélange dans une composition, le composé de silice pyrogénée peut être mis en œuvre dans le procédé selon l'invention sous la forme d'une poudre ou en dispersion dans un solvant qui s'évapore après application.

De préférence, lorsque la composition de revêtement comprend au moins un composé de silice pyrogénée et au moins un solvant, la composition de revêtement comprend de 5 à 70% en poids de composé de silice pyrogénée par rapport au poids total de la composition, plus préférentiellement de 20 à 40% en poids.

De préférence, le solvant est un solvant organique ou de l'eau. Par solvant organique, on entend tout solvant non miscible avec un bitume, tel qu'un alcool, par exemple l'éthanol.

Selon un mode de réalisation de l'invention, l'anti-agglomérant compris dans la composition bitumineuse formant les granules de bitume peut être identique ou différent de l'anti-agglomérant recouvrant au moins une partie de la surface desdites granules de bitume.

Selon un mode de réalisation de l'invention, les granules de bitume comprennent un cœur et une couche de revêtement dans lequel :
- le cœur comprend au moins une composition bitumineuse additivée selon l'invention telle que définie ci-dessus et,
- la couche de revêtement comprend au moins un composé viscosifiant et au moins un composé anti-agglomérant tel que défini ci-dessus.

Par « couche de revêtement », on entend que la couche de revêtement recouvre au moins 90% de la surface du cœur, de préférence au moins 95% de la surface du cœur, plus préférentiellement au moins 99% de la surface du cœur.

Par « viscosifiant » ou « composé viscosifiant », on entend un composé qui a la propriété de diminuer la fluidité d'un liquide ou d'une composition et donc d'en augmenter la viscosité.

Les termes « viscosifiant » et « composé viscosifiant » sont utilisés au sens de l'invention, de manière équivalente et indépendamment l'un de l'autre.

Le viscosifiant au sens de l'invention est un matériau qui présente une viscosité dynamique supérieure ou égale à 50 mPa.s⁻¹, de préférence de 50 mPa.s⁻¹ à 550 mPa.s⁻¹, plus préférentiellement de 80 mPa.s⁻¹ à 450 mPa.s⁻¹, la viscosité étant une viscosité Brookfield mesurée à 65°C. La viscosité d'un viscosifiant selon l'invention est mesurée à 65°C au moyen d'un viscosimètre Brookfield CAP 2000+ et à une vitesse de rotation de 750 tr/min. La lecture de la mesure est réalisée après 30 secondes pour chaque température.

De préférence, le viscosifiant est choisi parmi :
- les composés gélifiants de préférence d'origine végétale ou animale, tels que : la gélatine, l'agar-agar, les alginates, les dérivés de cellulose, les amidons, les amidons modifiés, ou les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Avantageusement, le viscosifiant est choisi parmi :
- les composés gélifiants de préférence d'origine végétale ou animale, tels que : la gélatine, l'agar-agar, les alginates, les dérivés de cellulose ou les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Selon un mode de réalisation de l'invention, la couche de revêtement est obtenue par application d'une composition comprenant au moins un composé viscosifiant et au moins un composé anti-agglomérant sur tout ou partie de la surface du cœur en composition bitumineuse solide.

De préférence, la couche de revêtement est solide à température ambiante, y compris à température ambiante élevée.

De préférence, la composition comprenant au moins un composé viscosifiant et au moins un composé anti-agglomérant présente une viscosité supérieure ou égale à 200 mPa.s⁻¹, de préférence comprise entre 200 mPa.s⁻¹ et 700 mPa.s⁻¹, la viscosité étant une viscosité Brookfield.

Préférentiellement, la couche de revêtement comprend au moins 10% en masse d'au moins un composé viscosifiant par rapport à la masse totale de la couche de revêtement, de préférence de 10 à 90 % en masse, plus préférentiellement de 10 à 85% en masse. Avantageusement, lorsque le vicosifiant est un gélifiant, comme par exemple de la gélatine, la couche de revêtement comprend de 10 à 90 % en masse de composé viscosifiant par rapport à la masse totale de la couche de revêtement, de préférence de 15 à 85%, encore mieux de 15 à 60%.

Avantageusement, lorsque le vicosifiant est un gélifiant, comme par exemple de la gélatine, la couche de revêtement comprend de 10 à 90 % en masse de composé anti-agglomérant par rapport à la masse totale de la couche de revêtement, de préférence de 15 à 85%, encore mieux de 40 à 85%.

Avantageusement, lorsque le vicosifiant est un PEG, comme par exemple un PEG ayant un poids moléculaire compris entre 800 g.mol⁻¹ et 8000 g.mol⁻¹, la couche de revêtement comprend de 10 à 90 % en masse de composé viscosifiant par rapport à la masse totale de la couche de revêtement, de préférence de 40 à 90%, encore mieux de 60 à 90%.

Avantageusement, lorsque le vicosifiant est un PEG, comme par exemple un PEG ayant un poids moléculaire compris entre 800 g.mol⁻¹ et 8000 g.mol⁻¹, la couche de revêtement comprend de 10 à 90 % en masse de composé anti-agglomérant par rapport à la masse totale de la couche de revêtement, de préférence de 10 à 60%, encore mieux de 10 à 40%.

Préférentiellement, la couche de revêtement comprend au moins 10% en masse d'un composé anti-agglomérant par rapport à la masse totale de la couche de revêtement, de préférence de 10 à 90% en masse, encore plus préférentiellement de 15 à 90 % en masse.

De préférence, la couche de revêtement représente au moins 5% en masse par rapport à la masse totale du granule, de préférence de 10 à 60% en masse, plus préférentiellement de 10 à 50%.

Avantageusement, le composé viscosifiant et le composé anti-agglomérant représentent au moins 90% en masse par rapport à la masse totale de la couche de revêtement, encore mieux au moins 95% en masse et avantageusement au moins 98% en masse.

Selon un mode de réalisation préféré, la couche de revêtement est essentiellement constituée du composé viscosifiant et du composé anti-agglomérant.

Outre le composé viscosifiant et le composé anti-agglomérant, la couche de revêtement peut éventuellement comprendre un ou plusieurs composés choisis parmi : les additifs chimiques, les polymères, ...

Selon un mode de réalisation de l'invention préféré, les granules de bitume présentent :
- un cœur comprenant au moins une composition bitumineuse selon l'invention telle que définie ci-dessus et,
- une couche de revêtement comprenant de la gélatine ou un PEG et au moins un composé anti-agglomérant choisi parmi les fines généralement de diamètre inférieur à 125 µm ; les résidus de bois tels que la lignine, les poudres d'aiguilles de conifères et les poudres de cônes de conifères ; la poudrette de caoutchouc ; la poudre de copolymères SBS ; les fumées de silice, notamment les fumées de silice hydrophile et hydrophobe; les silices pyrogénées, notamment les silices pyrogénées hydrophobes ou hydrophiles ; et leurs mélanges.

De manière encore préférée, les granules de bitume présentent :
- un cœur comprenant au moins une composition bitumineuse selon l'invention telle que définie ci-dessus et,
- une couche de revêtement comprenant de la gélatine ou un PEG et au moins un composé anti-agglomérant choisi parmi les fines généralement de diamètre inférieur à 125 µm ; la lignine ; la poudrette de caoutchouc ; les fumées de silice notamment les fumées de silice hydrophile et hydrophobe ; les silices pyrogénées, notamment les silices pyrogénées hydrophobes ou hydrophiles ; la poudre de copolymères SBS.

Selon un mode de réalisation encore préféré, les granules de bitume sont essentiellement constitués de :
- un cœur constitué d'une composition bitumineuse additivée selon l'invention telle que définie ci-dessus et,
- une couche de revêtement constituée d'un mélange de gélatine ou d'un PEG, avec au moins un composé anti-agglomérant choisi parmi les fines généralement de diamètre inférieur à 125 µm ; la lignine ; la poudrette de caoutchouc ; la poudre de copolymères SBS ; les fumées de silice, notamment les fumées de silice hydrophile et hydrophobe ; les silices pyrogénées, notamment les silices pyrogénées hydrophobes ou hydrophiles.

Préférentiellement, les granules de bitume sont essentiellement constitués de :
- un cœur constitué d'une composition bitumineuse additivée telle que définie ci-dessus comprenant au moins un additif chimique choisi parmi un composé organique, une paraffine, un acide polyphosphorique et leurs mélanges, et
- une couche de revêtement constituée d'un mélange de gélatine ou d'un PEG, avec au moins un composé anti-agglomérant choisi parmi les fines généralement de diamètre inférieur à 125 µm ; la lignine ; la poudrette de caoutchouc ; la poudre de copolymères SBS ; les fumées de silice, notamment les fumées de silice hydrophile et hydrophobe ; les silices pyrogénées, notamment les silices pyrogénées hydrophobes ou hydrophiles.

Selon un autre mode de réalisation encore préféré, les granules de bitume sont essentiellement constitués de :
- un cœur constitué d'une composition bitumineuse additivée selon l'invention telle que définie ci-dessus, comprenant un additif chimique de formule (I) défini ci-dessous et
- une couche de revêtement constituée d'un mélange de gélatine ou d'un PEG, avec au moins un composé anti-agglomérant choisi parmi les fines généralement de diamètre inférieur à 125 µm ; la lignine ; la poudrette de caoutchouc ; la poudre de copolymères SBS; les fumées de silice, notamment les fumées de silice hydrophile et hydrophobe ; les silices pyrogénées, notamment les silices pyrogénées hydrophobes ou hydrophiles.

Selon un autre mode de réalisation encore préféré, les granules de bitume sont essentiellement constitués de :
- un cœur constitué d'une composition bitumineuse additivée selon l'invention telle que définie ci-dessus, comprenant un additif chimique de formule (I) défini ci-dessous et
- une couche de revêtement constituée d'un mélange de gélatine ou d'un PEG, avec au moins un composé anti-agglomérant choisi parmi les fumées de silice, notamment les fumées de silice hydrophile et hydrophobe ; les silices pyrogénées, notamment les silices pyrogénées hydrophobes ou hydrophiles.

Selon un mode de réalisation de l'invention, les granules de bitume peuvent comprendre en outre une ou plusieurs autres couches d'enrobage, à base d'anti-agglomérant recouvrant tout ou en partie la couche de revêtement de la composition bitumineuse solide à froid selon l'invention.

### Kit de bitume solide à froid et sous forme divisée

Un autre objet de l'invention concerne un kit comprenant au moins :
- une base bitume solide à froid et sous forme divisée telle que définie ci-dessus,
- une capsule comprenant un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427 sous forme de granules.

Un tel kit permet la fabrication d'une composition bitumineuse selon l'invention dans des conditions de mise en œuvre facilitées. Notamment, la proportion de base bitume solide à froid et sous forme divisée et de brai est calculée lors de la fabrication du kit, ce qui évite de devoir doser la quantité de brai lors de la fabrication de la composition bitumineuse.

Selon un mode de réalisation de l'invention, la base bitume solide à froid et sous forme divisée est une base bitume comprenant au moins un additif tel que défini ci-dessus. Selon un mode de réalisation particulier, on prépare une base bitume solide à froid et sous forme divisée en mettant en contact :
- au moins une base bitume telle que définie ci-dessus,
- de 0,1% à 5% en masse, de préférence de 0,5% à 4% en masse, plus préférentiellement de 0,5% à 2,8% en masse, et encore plus préférentiellement de 0,5% à 2,5% en masse d'au moins un additif chimique choisi parmi un composé organique, une paraffine, un acide polyphosphorique et leurs mélanges,
les pourcentages étant donnés en masse rapportée à la masse totale de la base bitume.

Selon un mode de réalisation de l'invention, la base bitume solide à froid et sous forme divisée est sous forme de pain.

Les modes de réalisation décrits ci-dessus pour le pain de bitume s'appliquent également au pain de la base bitume.

Selon un mode de réalisation de l'invention, la base bitume sous forme de pain comprend sur une de ses faces, une cavité permettant de loger tout ou partie de la capsule.

Selon un mode de réalisation de l'invention, la capsule est logée en tout ou partie dans la cavité de manière amovible.

Selon ce mode de réalisation, la capsule peut être une capsule à enveloppe molle, notamment un sachet, ou une capsule à enveloppe dure.

De préférence, la capsule est en film plastique thermofusible, notamment en polyéthylène, ou en silicone.

Un autre objet de l'invention concerne l'utilisation du kit tel que défini ci-dessus dans le procédé de préparation d'une composition bitumineuse prête pour application selon l'invention.

Selon un mode de réalisation de l'invention, la base bitume sous forme de pain et la capsule formant le kit tel que défini ci-dessus sont utilisées dans le procédé de préparation d'une composition bitumineuse simultanément ou consécutivement.

Dans une variante, lorsque la base bitume sous forme de pain et la capsule formant le kit tel que défini ci-dessus sont utilisés consécutivement dans le procédé de préparation d'une composition bitumineuse, ladite base bitume sous forme de pain est préalablement chauffée puis la capsule est ajoutée. Dans cette variante, avant le chauffage du pain de base bitume, la capsule est délogée de la cavité présente sur l'une des faces du pain.

Dans une autre variante, lorsque la base bitume sous forme de pain et la capsule formant le kit tel que défini ci-dessus sont utilisés simultanément dans le procédé de préparation d'une composition bitumineuse.

### Enrobés bitumineux ou bétons bitumineux

L'invention concerne l'utilisation de la composition bitumineuse selon l'invention telle que définie ci-dessus pour la fabrication d'enrobés bitumineux ou de bétons bitumineux.

L'invention donne accès à des enrobés bitumineux ou bétons bitumineux comprenant la composition selon l'invention telle que définie ci-dessus et des granulats.

L'invention concerne également un procédé de fabrication d'enrobés bitumineux ou de bétons bitumineux comprenant au moins une composition bitumineuse et des granulats, la composition bitumineuse étant choisie parmi les compositions bitumineuses solides à froid et sous forme divisée selon l'invention telle que définie ci-dessus ce procédé comprenant au moins les étapes de :
- chauffage des granulats à une température allant de 100°C à 180°C,
- mélange des granulats avec la composition bitumineuse dans une cuve telle qu'un malaxeur ou un tambour malaxeur,
- obtention d'enrobés.

Le procédé de l'invention présente l'avantage de pouvoir être mis en œuvre sans étape préalable de chauffage des granules de bitume solide. Selon un mode de réalisation de l'invention, le procédé ne comporte pas d'étape de chauffage de la composition bitumineuse solide à froid et sous forme divisée avant son mélange avec les granulats.

Le procédé de fabrication d'enrobés selon l'invention ne requiert pas d'étape de chauffage de la composition bitumineuse solide avant mélange avec les granulats car au contact des granulats chauds, le bitume solide à température ambiante fond.

Le bitume solide à température ambiante selon l'invention tel que décrit ci-dessus présente l'avantage de pouvoir être ajouté directement aux granulats chauds, sans avoir à être fondu préalablement au mélange avec les granulats chauds.

De préférence, l'étape de mélange des granulats et du liant routier est réalisée sous agitation, puis l'agitation est maintenue pendant au plus 5 minutes, de préférence au plus 1 minute pour permettre l'obtention d'un mélange homogène.

Le bitume solide selon la présente invention est remarquable en ce qu'il permet le transport et/ou le stockage de bitume routier à température ambiante dans des conditions optimales, en particulier sans qu'il y ait agglomération et/ou adhésion du bitume solide lors de son transport et/ou son stockage, même lorsque la température ambiante est élevée.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Partie expérimentale :

### Matériel et méthodes

Les propriétés des bitumes sont mesurées au moyen des méthodes décrites ci-dessous :
- Pénétrabilité à l'aiguille à 25°C (P25) : unité = 1/10mm, norme EN 1426.
- Température de ramollissement bille et anneaux (TBA) : unité = °C, norme EN1427.
- Point de fragilité Fraass (Fraass) : unité = °C, norme EN12593
- Module Complexe G* de la composition bitumineuse mesuré à 15°C et à 60°C et à une fréquence de 10Hz : unité = MPa ou Pa, norme EN 14770
- Module Complexe de Rigidité des enrobés bitumineux mesuré à 15°C et à une fréquence de 10Hz : unité = MPa, norme EN 12697-24-26

### Matières premières :

- Base Bitume (B) : on a utilisé plusieurs bases bitume dont les caractéristiques sont présentées ci-dessous dans le tableau 1 :

**Tableau 1 : caractéristiques de bases bitume testées**

| | Nom commercial ou composition | Pénétrabilité P₂₅ | TBA |
|---|---|---|---|
| B1 | Azalt ® 50/70 (base bitume) | 50 | 51,1°C |
| B2 | Azalt ® 35/50 (base bitume) | 40 | 51,6°C |
| B3 | Base bitume d'origine ghanéenne | 125 | 42,0°C |
| B4 | Base bitume d'origine ghanéenne | 89 | 45,6°C |
| B5 | Stelox®110/30 (bitume oxydé) | 25 | 113 |
| B6 | Modulotal® (bitume de grade dur utilisé pour la fabrication d'enrobés à module élevé) | 16 | 65,4 |

- Gilsonite (G) vendu commercialement par Hillington sous la marque H103 M®
- Brai (BR) : on a utilisé plusieurs brais dont les caractéristiques sont présentées ci-dessous dans le tableau 2 :

**Tableau 2 : caractéristiques des brais testés**

| | Pénétrabilité P₂₅ | TBA |
|---|---|---|
| BR1 | 0-2 | 115-125°C |
| BR2 | 0-2 | 135-145°C |
| BR3 | 0-2 | 165-175°C |

### I - Préparation des compositions selon l'invention et des compositions témoins :

A partir des bases bitume B1 à B6 et des brais BR1 à BR3 ou de la Gilsonite G, des compositions bitumineuses ont été préparées selon le protocole suivant :
La base bitume BX (X = 1 à 4) a été portée à 180°C et du brai (ou de la Gilsonite ou de la base B5 ou B6) a été ajouté à une température de 180°C. Le mélange a été maintenu agité à 180°C pendant 1h et sous 300 tr/min.

Les compositions C1 à C10 ainsi obtenues sont résumées dans le tableau 3A ci-dessous. Les teneurs sont données en masse rapportée à la masse totale de la composition :

**Tableau 3 A : Compositions bitumineuses selon l'invention**

| Composition | C1 | C2 | C3 | C4 | C5 | C6 | C7 | C8 | C9 | C10 |
|---|---|---|---|---|---|---|---|---|---|---|
| B1 | 88% | 88% | - | - | - | - | - | - | - | - |
| B2 | - | - | 95% | 85% | 90% | 80% | - | - | - | - |
| B3 | - | - | - | - | - | - | 95% | - | 97% | - |
| B4 | - | - | - | - | - | - | - | 95% | - | 97% |
| BR1 | 12% | - | - | - | - | - | - | - | - | - |
| BR2 | - | 12% | - | - | 10% | 20% | 5% | 5% | - | - |
| BR3 | - | - | 5% | 15% | - | - | - | - | 3% | 3% |

Les compositions T1 à T3 ainsi obtenues sont résumées dans le tableau 3B ci-dessous. Les teneurs sont données en masse rapportée à la masse totale de la composition :

**Tableau 3 B : Compositions bitumineuses témoins**

| Composition | T1 | T2 | T3 |
|---|---|---|---|
| B1 | 61% | 88% | 88% |
| B5 | - | 12% | - |
| B6 | 39% | - | - |
| G | - | - | 12% |

Les compositions C1 à C10 ainsi que les compositions témoins T1 et T2 présentent des aspects homogènes après leur fabrication.

La composition témoin T3 présente un aspect non homogène (bi-phasique) avec la présence de dépôts en fond de cuve après leur fabrication. Par conséquent, l'utilisation de gilsonite pour durcir des bitumes n'est pas conseillée du fait de l'aspect non-homogène de la composition obtenue. Les tests de propriétés mécaniques n'ont donc pas pu être réalisés sur cette composition témoin T3.

### II - Mesures des propriétés mécaniques des compositions selon l'invention, des bases bitumes et des compositions témoins :

Les propriétés de pénétrabilité, de point de ramollissement, de Fraass ainsi que du module G* à une fréquence de 10Hz et respectivement à des températures de 15°C et 60°C ont été mesurées pour les compositions C1 à C10, les bases bitumes B1 à B6 et les compositions témoins T1 à T3.

Les propriétés des compositions C1 à C10 ainsi que les propriétés des bases bitumes B1 à B6 et des compositions témoins T1 à T3 sont résumées dans les tableaux 4A et 4B ci-dessous :

**Tableau 4 A : Propriétés mécaniques des compositions C1 à C10**

| Composition | C1 | C2 | C3 | C4 | C5 | C6 | C7 | C8 | C9 | C10 |
|---|---|---|---|---|---|---|---|---|---|---|
| Pénétrabilité (1/10 mm) | 30 | 30 | 28 | 16 | 26 | 19 | 86 | 62 | 87 | 64 |
| TBA (°C) | 58,2 | 58,6 | 55,6 | 63,6 | 58,6 | 64,2 | 47,2 | 50,6 | 46,6 | 50,2 |
| G* (MPa) (15°C, 10Hz) | 28,2 | 28,3 | 69 | 96 | 76 | 105 | 8,0 | 12,4 | 7,2 | 9,7 |
| G* (Pa) (60°C, 10Hz) | 538 00 | 578 00 | nd | nd | nd | nd | nd | nd | nd | nd |

| | | | | | | | | | | |
|---|---|---|---|---|---|---|---|---|---|---|
| nd : propriété non déterminée | | | | | | | | | | |

**Tableau 4 B : Propriétés mécaniques des bases bitumes B1 à B6 et des témoins T1 à T3**

| Composition | B1 | B2 | B3 | B4 | B5 | B6 | T1 | T2 |
|---|---|---|---|---|---|---|---|---|
| Pénétrabilité (1/10 mm) | 50 | 40 | 125 | 89 | 25 | 16 | 30 | 42 |
| TBA (°C) | 51,1 | 51,6 | 42 | 45,6 | 113 | 65,4 | 58,2 | 54,6 |
| G* (MPa) (15°C, 10Hz) | 21,4 | 54 | 5,7 | 9,1 | 12,2 | 47 | 39,8 | 19,1 |
| G* (Pa) (60°C, 10Hz) | 24000 | nd | nd | nd | nd | nd | nd | 27500 |

| | | | | | | | | |
|---|---|---|---|---|---|---|---|---|
| nd : propriété non déterminée | | | | | | | | |

### Propriétés mécaniques des compositions C1 à C10, des bases bitumes B1 à B6 et des témoins T1 à T3 après vieillissement.

On constate que l'ajout d'un brai selon l'invention dans une base bitume de grade plus mou telle que l'Azalt® 50/70 ou l'Azalt® 35/50 conduit à un durcissement de cette base qui se traduit notamment par un abaissement de la pénétrabilité et une augmentation de la TBA (compositions C1, C2, C3, C5) :
i) de 50 à 30 1/10 mm et de 51,1 à 58,2°C ou 58,6°C pour l'Azalt® 50/70 en présence de 12% de brai,
ii) d'environ 40 à 28 1/10 mm et d'environ 51,6 à 55,6°C pour l'Azalt® 35/50 en présence de 5% de brai,
iii) d'environ 40 à 26 1/10 mm et d'environ 51,6 à 58,6°C pour l'Azalt® 35/50 en présence de 10% de brai,
ce qui permet de formuler une composition répondant aux spécifications en termes de pénétrabilité et de TBA à une composition de grade 20/30, à partir d'un grade 50/70 ou 35/50.

On constate également que l'ajout d'un brai selon l'invention dans une base bitume de grade plus mou telle que l'Azalt® 35/50 conduit à un durcissement de cette base qui se traduit notamment par un abaissement de la pénétrabilité et/ou une augmentation de la TBA (compositions C4 et C6) :
i) d'environ 40 à 16 1/10 mm et d'environ 51,6 à 63,6°C pour l'Azalt® 35/50 en présence de 15% de brai (BR3),
ii) d'environ 40 à 19 1/10 mm et d'environ 51,6 à 64,2°C pour l'Azalt® 35/50 en présence de 20% de brai (BR2),
ce qui permet de formuler une composition répondant aux spécifications en termes de pénétrabilité et de TBA à une composition de grade 10/20, à partir d'un grade 35/50.

On constate que l'ajout d'un brai selon l'invention dans une base bitume de grade plus mou telle que l'Azalt® 50/70 ou l'Azalt® 35/50 conduit à une augmentation significative du module G* de la composition :
i) pour un bitume de grade 50/70, son module passe de 21,4 MPa à un module au-delà de 28 MPa avec l'ajout de 12% de brai selon l'invention,
ii) pour un bitume de grade 35/50, son module passe de 54 à un module compris 69 et 105 MPa en fonction de la quantité de brai selon l'invention ajouté.

Comparativement, on constate que l'ajout de Modulotal®10/20 dans une base bitume de grade plus mou telle que l'Azalt® 50/70 conduit à un durcissement de cette base qui se traduit notamment par un abaissement de la pénétrabilité et une augmentation de la TBA (composition T1) :
i) de 50 à 30 1/10 mm et de 51,1 à 58,2°C pour l'Azalt® 50/70 en présence de 39% de Modulotal®10/20,
ce qui permet de formuler une composition répondant aux spécifications en termes de pénétrabilité et de TBA à une composition de grade 20/30, à partir d'un grade 50/70.

S'agissant du module, l'ajout de Modulotal ® dans une base bitume de grade plus mou telle que l'Azalt® 50/70 conduit à une augmentation significative du module G* de la composition :
i) pour un bitume de grade 50/70, son module passe de 21,4 MPa à un module au-delà d'environ 40 MPa avec l'ajout de 39% de modulotal.

Néanmoins, à iso-pénétrabilité, c'est-à-dire afin d'obtenir une composition de grade 20/30, à partir d'un grade 50/70, il est nécessaire d'utiliser à minima trois fois plus de bitume dur Modulotal® 10/20 que de brai, ce qui représente une plus grande complexité en termes de logistique du bitume dur.

Comparativement, on constate que l'ajout de Stelox®110/30 dans une base bitume de grade plus mou telle que l'Azalt® 50/70 conduit à un durcissement de cette base qui se traduit notamment par un abaissement de la pénétrabilité et une augmentation de la TBA (composition T2) :
i) de 50 à 42 1/10 mm et de 51,1 à 54,6°C pour l'Azalt® 50/70 en présence de 12% de Stelox®110/30,
ce qui permet de formuler une composition répondant aux spécifications en termes de pénétrabilité et de TBA à une composition de grade 35/50, à partir d'un grade 50/70.

Néanmoins, à iso-teneur en Stelox ® et en brai, c'est-à-dire avec 12% de Stelox ® dans la composition témoin T2 et 12% de brai dans la composition C1, on obtient à partir d'un bitume de grade 50/70, une composition de grade 35/50 en utilisant du Stelox ® alors qu'en utilisant du brai, on obtient, à partir d'un bitume de grade 50/70, une composition de grade 20/30.

On constate également que l'ajout de 12% de Stelox ® dans un bitume de grade 50/70 ne permet pas d'améliorer le module de ce bitume mais bien au contraire abaisse son module car il passe de 21,4 MPa à 19,1 MPa contrairement à l'ajout de brai dans un bitume de grade 50/70.

Par conséquent, ces résultats démontrent qu'à iso-teneur en Stelox ® et en brai, un bitume comprenant 12% de brai présente un grade plus dur et également un module plus élevé qu'un bitume comprenant 12% de Stelox ®.

On constate également que l'ajout d'un brai selon l'invention dans une base bitume B3 de grade plus mou conduit à un durcissement de cette base qui se traduit notamment par un abaissement de la pénétrabilité et/ou une augmentation de la TBA :
i) de 125 à 86 1/10 mm et de 42 à 47,2°C pour la base bitume B3 en présence de 5% de brai BR2 (composition C7),
ii) de 125 à 87 1/10 mm et de 42 à 46,6°C pour la base bitume B3 en présence de 3% de brai BR3 (composition C9),
ce qui permet de formuler une composition répondant aux spécifications en termes de pénétrabilité à une composition présentant une pénétrabilité inférieure à 90 1/10 mm et répondant aux spécifications du grade AC10.

On constate également que l'ajout d'un brai selon l'invention dans une base bitume B4 de grade plus mou conduit à un durcissement de cette base qui se traduit notamment par un abaissement de la pénétrabilité et/ou une augmentation de la TBA :
i) de 89 à 62 1/10 mm et de 45,6 à 50,6°C pour la base bitume B4 en présence de 5% de brai BR2 (composition C8),
ii) de 89 à 64 1/10 mm et de 45,6 à 50,2°C pour la base bitume B4 en présence de 3% de brai BR3 (composition C10),
ce qui permet de formuler une composition répondant aux spécifications en termes de pénétrabilité à une composition présentant une pénétrabilité inférieure à 70 1/10 mm et répondant aux spécifications du grade AC20.

On constate que l'ajout d'un brai selon l'invention dans une base bitume de grade plus mou telle que les bases bitumes B3 ou B4 conduit à une augmentation significative du module G* de la composition :
i) pour la base bitume B3, son module passe de 5,7 à un module compris entre 7,2 et 8 MPa en fonction de la quantité de brai selon l'invention ajouté,
ii) pour la base bitume B4, son module passe de 9 à un module compris entre 9,7 et 12,4 MPa en fonction de la quantité de brai selon l'invention ajouté.

Par conséquent, l'ajout de brai selon l'invention dans une base bitume permet à la fois d'obtenir une base bitume de grade plus dur et également d'obtenir une base bitume présentant un module élevé ce qui permet de l'utiliser pour la fabrication d'enrobés à module élevé.

### III - Préparation d'enrobés bitumineux et mesures de leurs propriétés mécaniques :

Un enrobé bitumineux est caractérisé comme un enrobé bitumineux à module élevé également appelé EME selon la norme NF EN 13108-1 s'il présente au moins un module complexe de rigidité supérieur à 14000 MPa, la mesure étant effectuée mesuré à 15°C et à une fréquence de 10Hz selon la norme NF EN 12697-26.

Deux enrobés bitumineux (E1 et E2) sont respectivement obtenus à partir de la base bitume B1 et de la composition C2 selon l'invention et de granulats présentant la coupe granulaire décrite dans le tableau 5 :

**Tableau 5 : Composition granulométrique**

| | | | | | |
|---|---|---|---|---|---|
| Coupe (mm) | 0/2 | 2/6 | 6/10 | 10/14 | Filler |
| Poids (%) | 31 | 18 | 20 | 29 | 2 |

Les enrobés bitumineux sont préparés de la manière suivante :
- Les granulats sont portés à la température de 165°C pendant une durée de 8h environ,
- La composition bitumineuse est chauffée à 165°C puis versée sur les granulats préalablement chauffés, le mélange ainsi obtenu est malaxé pendant environ 180 secondes à 165°C.

Les enrobés bitumineux ainsi obtenus présentent une teneur en composition bitumineuse de 5,1% en masse par rapport à la masse totale des enrobés.

Les enrobés bitumineux E1 et E2 sont obtenus selon la méthode décrite ci-dessus et comprennent respectivement 5,1% en masse de base bitume B1 et de la composition C2 selon l'invention par rapport à la masse totale des enrobés.

Les modules de rigidité complexe des enrobés bitumineux E1 et E2 sont résumés dans le tableau 6 ci-dessous.

**Tableau 6 : Module complexe de rigidité des enrobés bitumineux E1 et E2**

| | E1 | E2 |
|---|---|---|
| Module complexe à 15°C et à 10Hz (MPa) | 11493 | 14608 |

Les enrobés bitumineux E2 obtenus à partir de la composition C2 selon l'invention présentent un module complexe de 14608 MPa, contrairement aux enrobés bitumineux E1 obtenus à partir de la base bitume de grade 50/70 dont le module complexe est de 11493 MPa.

Par conséquent, les enrobés bitumineux E2 présentant une valeur de module supérieure à 14000 Pa peuvent être utilisés en tant qu'enrobés bitumineux à module élevé contrairement aux enrobés bitumineux E1.

### IV - Préparation des différents cœurs de granules de composition bitumineuse

### 4.1 Préparation de la composition bitumineuse additivée

La composition bitumineuse additivée **C2'** est préparée à partir de la composition **C2** préparée précédemment et de l'acide 1,10 décanedioïque, noté Additif **A1**.

Les quantités en pourcentage massique utilisées pour la préparation de la composition bitumineuse additivée **C2'** sont indiquées dans le tableau 7 ci-dessous.

**Tableau 7**

| **Composition additivée** | **C2'** |
|---|---|
| Composition C2 | 98,5% |
| Additif A1 | 1,5% |

La composition bitumineuse additivée **C2'** est préparée de la manière suivante.

On introduit la composition **C2** dans un réacteur maintenu à 160°C sous agitation à 300 tours/min pendant deux heures. On introduit ensuite dans le réacteur l'additif **A1**. Le contenu du réacteur est maintenu à 160°C sous agitation à 300 tours/min pendant 1 heure.

Les cœurs de granules **G₂** sont préparés à partir de la composition bitumineuse additivée **C2'** selon l'un des protocoles suivants.

### 4.2 Méthode générale pour la préparation des cœurs en composition bitumineuse G₂ des granules selon l'invention

La base de composition bitumineuse **C2'** est réchauffée à 170°C pendant deux heures à l'étuve avant d'être coulée dans un moule en silicone présentant différents trous de forme sphérique de façon à former les cœurs de composition bitumineuse. Après avoir constaté la solidification de la composition bitumineuse dans le moule, le surplus est arasé avec une lame chauffée au bec bunsen. Après 30 minutes, la composition bitumineuse solide sous forme de granules non enrobés est démoulée et stockée dans un plateau recouvert de papier siliconé.

### 4.3 Méthode générale pour la préparation des cœurs en composition bitumineuse G₂ des granules selon l'invention avec un procédé industriel

Pour la mise en œuvre de cette méthode, on peut utiliser un dispositif et un procédé tel que décrit de façon très détaillée dans le brevet US 4 279 579. Différents modèles de ce dispositif sont disponibles commercialement auprès de la société Sandvik sous le nom commercial de Rotoform.

Des granules **G₂** de composition bitumineuse peuvent également être obtenues à partir de la composition bitumineuse additivée **C2'** versée dans le réservoir d'un tel dispositif et maintenue à une température comprise entre 130 et 270°C.

Une buse ou plusieurs buses d'injection permet(tent) le transfert de la composition bitumineuse additivée **C2'** à l'intérieur du double tambour de pastillation comportant un tambour externe rotatif, les deux tambours étant équipés de fentes, de buses et d'orifices permettant la pastillation de gouttes de composition bitumineuse au travers du premier tambour fixe et des orifices présentant un diamètre compris entre 2 et 10 mm du tambour externe rotatif. Les gouttes de composition bitumineuse sont déposées sur la face supérieure d'une bande de roulement, horizontale, entrainée par des rouleaux.

### V- Méthode générale pour la préparation des granules de composition bitumineuse solide selon l'invention comprenant une couche de revêtement composée d'au moins un composé anti-agglomérant

Les granules de composition bitumineuse additivée obtenus selon les méthodes 4.2 et 4.3 sont laissés à température ambiante pendant 10 à 15 minutes. Les granules ainsi formés sont recouverts à leur surface d'un composé anti-agglomérant, puis passés au tamis afin d'enlever l'excédent de composé anti-agglomérant.

Les granules **G₂**' sont préparés à partir des granules **G₂** obtenus précédemment et selon la méthode décrite ci-dessus en utilisant comme composé anti-agglomérant de la silice pyrogénée disponible commercialement sous la référence AEROSIL®200.

Le pourcentage massique de l'enrobage pour les granules **G₂'** est d'environ 1% en masse par rapport à la masse totale du bitume des granules.

On constate que les granules obtenus présentent l'avantage d'être facilement transportables et présentent une bonne résistance au stockage.

## Revendications

1. Composition bitumineuse sous forme solide à froid et sous une forme divisée **caractérisée en ce que** la composition comprend :
a) de 2 à 30% en masse d'au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427, et
b) au moins une base bitume,
par rapport à la masse totale de la composition.

2. Composition selon la revendication 1, dans laquelle le brai est un brai oxydé.

3. Composition bitumineuse selon l'une quelconque des revendications 1 et 2, qui est solide à froid et sous forme divisée, et comprend en outre au moins un additif chimique choisi parmi un composé organique, une paraffine, un acide polyphosphorique et leurs mélanges.

4. Composition bitumineuse selon la revendication 3 comprenant de 0,1% à 5% en masse, de préférence de 0,5% à 4% en masse, plus préférentiellement de 0,5% à 2,8% en masse, et encore plus préférentiellement de 0,5% à 2,5% en masse dudit additif chimique par rapport à la masse totale de la base bitume.

5. Composition bitumineuse selon la revendication 3 ou 4, dans laquelle l'additif chimique est un composé organique qui présente une masse molaire en masse inférieure ou égale à 2000 gmol⁻¹, de préférence une masse molaire inférieure ou égale à 1000 gmol⁻¹.

6. Composition bitumineuse selon l'une quelconque des revendications 3 à 5, sous forme de pain ou de granules.

7. Procédé de fabrication d'une composition de bitume selon l'une quelconque des revendications 1 à 6, ce procédé comprenant les étapes suivantes :
- Chauffage de la base bitume b) à une température allant de 140 à 180°C,
- Introduction du brai a) dans la base bitume b),
- Agitation du mélange à une température allant de 140 à 180°C jusqu'à l'obtention d'un mélange homogène.

8. Kit susceptible d'être utilisé pour la fabrication d'une composition bitumineuse selon l'une quelconque des revendications 1 à 6, comprenant au moins :
- une base bitume solide à froid et sous forme divisée,
- une capsule comprenant au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427 sous forme de granule.

9. Kit selon la revendication 8, dans lequel la base bitume solide à froid et sous forme divisée comprend sur une de ses faces, une cavité permettant de loger tout ou partie de la capsule.

10. Kit selon la revendication 9, dans lequel la capsule est logée en tout ou partie dans ladite cavité de manière amovible.

11. Procédé de préparation d'une composition bitumineuse selon l'une quelconque des revendications 3 à 6, comprenant :
- le mélange d'au moins une composition bitumineuse selon l'une quelconque des revendications 1 et 2 et d'au moins un additif chimique choisi parmi un composé organique, une paraffine, un acide polyphosphorique et leurs mélanges, pour former une composition bitumineuse additivée,
- la mise en forme de la composition bitumineuse additivée sous forme de pain ou de granules.

12. Procédé de transport et/ou de stockage et/ou de manipulation d'une composition bitumineuse selon l'une quelconque des revendications 3 à 6, ladite composition bitumineuse étant transportée et/ou stockée et/ou manipulée sous forme de pains ou de granules de composition bitumineuse solides à température ambiante.

13. Procédé de fabrication d'enrobés bitumineux ou de bétons bitumineux comprenant au moins une composition bitumineuse et des granulats, la composition bitumineuse étant choisie parmi les compositions bitumineuses solides à froid et sous forme divisée selon l'une quelconque des revendications 3 à 6, ce procédé comprenant au moins les étapes de :
- chauffage des granulats à une température allant de 100°C à 180°C,
- mélange des granulats avec la composition bitumineuse dans une cuve telle qu'un malaxeur ou un tambour malaxeur,
- obtention d'enrobés.

14. Utilisation d'un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427 pour augmenter le module d'une composition bitumineuse ou pour augmenter le module des enrobés ou bétons bitumineux.

## Patentansprüche

1. Bitumenzusammensetzung in einer im kalten Zustand festen Form und in zerteilter Form, **dadurch gekennzeichnet, dass** die Zusammensetzung:
a) von 2 bis 30 Gewichts-% von mindestens einem Pech mit einer Penetration bei 25°C von 0 bis 20 1/10 mm, einem Erweichungspunkt Ring und Kugel (RuK) von 115°C bis 175°C, wobei die Penetration nach der Norm EN 1426 ermittelt wird und der Erweichungspunkt RuK nach der Norm EN 1427 ermittelt wird, und
b) mindestens eine Bitumenbasis
bezogen auf das Gesamtgewicht der Zusammensetzung umfasst.

2. Zusammensetzung nach Anspruch 1, bei der das Pech ein oxidiertes Pech ist.

3. Bitumenzusammensetzung nach Anspruch 1 oder 2, die im kalten Zustand fest ist und in zerteilter Form vorliegt und ferner mindestens einen chemischen Zusatzstoff umfasst, der aus einer organischen Verbindung, einem Paraffin, einer Polyphosphorsäure und deren Mischungen ausgewählt ist.

4. Bitumenzusammensetzung nach Anspruch 3, die bezogen auf das Gesamtgewicht der Bitumenbasis 0,1 Gewichts-% bis 5 Gewichts-%, vorzugsweise 0,5 Gewichts-% bis 4 Gewichts-%, bevorzugter 0,5 Gewichts-% bis 2,8 Gewichts-% und noch bevorzugter 0,5 Gewichts-% bis 2,5 Gewichts-% des chemischen Zusatzstoffs umfasst.

5. Bitumenzusammensetzung nach Anspruch 3 oder 4, wobei der chemische Zusatzstoff eine organische Verbindung ist, die eine molare Masse von unter oder gleich 2000 g/mol, vorzugsweise eine molare Masse von unter oder gleich 1000 g/mol aufweist.

6. Bitumenzusammensetzung nach einem der Ansprüche 3 bis 5 in Form eines Blocks oder in Form von Granulat.

7. Verfahren zur Herstellung einer Bitumenzusammensetzung nach einem der Ansprüche 1 bis 6, wobei dieses Verfahren folgende Schritte umfasst:
- Erwärmen der Bitumenbasis b) auf eine Temperatur von 140 bis 180°C,
- Einbringen des Pechs a) in die Bitumenbasis b),
- Rühren der Mischung bei einer Temperatur von 140 bis 180°C bis zum Erhalten einer homogenen Mischung.

8. Kit, das zur Herstellung einer Bitumenzusammensetzung nach einem der Ansprüche 1 bis 6 verwendbar ist, das mindestens umfasst:
- eine Bitumenbasis, die im kalten Zustand fest ist und in zerteilter Form vorliegt,
- eine Kapsel, die mindestens ein Pech mit einer Penetration bei 25°C von 0 bis 20 1/10 mm und einem Erweichungspunkt Ring und Kugel (RuK) von 115°C bis 175°C in Form von Granulat umfasst, wobei die Penetration nach der Norm EN 1426 ermittelt wird und der Erweichungspunkt RuK nach der Norm EN 1427 ermittelt wird.

9. Kit nach Anspruch 8, wobei die Bitumenbasis, die im kalten Zustand fest ist und in zerteilter Form vorliegt, an einer ihrer Flächen einen Hohlraum umfasst, in dem sich die komplette Kapsel oder ein Teil der Kapsel unterbringen lässt.

10. Kit nach Anspruch 9, wobei die Kapsel herausnehmbar komplett oder zum Teil in dem Hohlraum untergebracht ist.

11. Verfahren zur Herstellung einer Bitumenzusammensetzung nach einem der Ansprüche 3 bis 6, umfassend:
- Mischen von mindestens einer Bitumenzusammensetzung nach Anspruch 1 oder 2 und mindestens einem chemischen Zusatzstoff, der aus einer organischen Verbindung, einem Paraffin, einer Polyphosphorsäure und deren Mischungen ausgewählt ist, damit eine mit Zusatzstoff versetzte Bitumenzusammensetzung entsteht,
- Formen der mit Zusatzstoff versetzten Bitumenzusammensetzung zu einem Block oder Granulat.

12. Verfahren zum Transportieren und/oder Lagern und/oder Handhaben von einer Bitumenzusammensetzung nach einem der Ansprüche 3 bis 6, wobei die Bitumenzusammensetzung in Form von bei Umgebungstemperatur festen Blöcken oder festem Granulat aus der Bitumenzusammensetzung transportiert und/oder gelagert und/oder gehandhabt wird.

13. Verfahren zur Herstellung von bitumenhaltigem Mischgut oder Bitumenbeton, das bzw. der mindestens eine Bitumenzusammensetzung und Zuschlagstoffe umfasst, wobei die Bitumenzusammensetzung aus den Bitumenzusammensetzungen, die im kalten Zustand fest sind und in zerteilter Form vorliegen, nach einem der Ansprüche 3 bis 6 ausgewählt ist, wobei dieses Verfahren zumindest folgende Schritte umfasst:
- Erwärmen der Zuschlagstoffe auf eine Temperatur von 100°C bis 180°C,
- Mischen der Zuschlagstoffe mit der Bitumenzusammensetzung in einem Behälter wie einem Mischer oder einer Mischtrommel,
- Erhalten von Mischgut.

14. Verwendung von einem Pech mit einer Penetration bei 25°C von 0 bis 20 1/10 mm und einem Erweichungspunkt Ring und Kugel (RuK) von 115°C bis 175°C, wobei die Penetration nach der Norm EN 1426 ermittelt wird und der Erweichungspunkt RuK nach der Norm EN 1427 ermittelt wird, zur Erhöhung des Moduls einer Bitumenzusammensetzung oder zur Erhöhung des Moduls des bitumenhaltigen Mischguts oder Bitumenbetons.

## Claims

1. A bituminous composition which is in solid form under cold conditions and in divided form, **characterized in that** the composition comprises:
a) from 2% to 30% by mass, of at least one pitch with a penetrability at 25°C ranging from 0 to 20 1/10 mm and a ring and ball softening point (RBSP) ranging from 115°C to 175°C, it being understood that the penetrability is measured according to the standard EN 1426 and that the RBSP is measured according to the standard EN 1427, and
b) at least one bitumen base,
relative to the total mass of the composition.

2. The composition as claimed in claim 1, in which the pitch is an oxidized pitch.

3. The bituminous composition as claimed in any one of claims 1 and 2, which is solid under cold conditions and in divided form, and also comprises at least one chemical additive chosen from an organic compound, a paraffin, a polyphosphoric acid, and mixtures thereof.

4. The bituminous composition as claimed in claim 3, comprising from 0.1% to 5% by mass, preferably from 0.5% to 4% by mass, more preferentially from 0.5% to 2.8% by mass and even more preferentially from 0.5% to 2.5% by mass of said chemical additive relative to the total mass of said bitumen base.

5. The bituminous composition as claimed in claim 3 or 4, in which the chemical additive is an organic compound which has a molar mass of less than or equal to 2000 g.mol⁻¹, preferably a molar mass of less than or equal to 1000 g.mol⁻¹.

6. The bituminous composition as claimed in any one of claims 3 to 5, in the form of blocks or pellets.

7. A process for manufacturing a bitumen composition as claimed in any one of claims 1 to 6, said process comprising the following steps:
- heating the bitumen base b) to a temperature ranging from 140 to 180°C,
- introducing pitch a) into the bitumen base b),
- stirring the mixture at a temperature ranging from 140 to 180°C until a homogeneous mixture is obtained.

8. A kit that may be used for the manufacture of a bituminous composition as claimed in any one of claims 1 to 6, comprising at least:
- a bitumen base which is solid under cold conditions and in divided form,
- a capsule comprising at least one pitch with a penetrability at 25°C ranging from 0 to 20 1/10 mm and a ring and ball softening point (RBSP) ranging from 115°C to 175°C, it being understood that the penetrability is measured according to the standard EN 1426 and that the RBSP is measured according to the standard EN 1427, in the form of pellets.

9. The kit as claimed in claim 8, in which the bitumen base which is solid under cold conditions and in divided form comprises, on one of its faces, a cavity for housing all or part of the capsule.

10. The kit as claimed in claim 9, in which the capsule is removably housed entirely or partially in said cavity.

11. A process for preparing a bituminous composition as claimed in any one of claims 3 to 6, comprising:
- the mixing of at least one bituminous composition as claimed in any one of claims 1 and 2 and of at least one chemical additive chosen from an organic compound, a paraffin, a polyphosphoric acid, and mixtures thereof, to form a supplemented bituminous composition,
- the forming of the supplemented bituminous composition in the form of a block or pellets.

12. A process for transporting and/or storing and/or handling a bituminous composition as claimed in any one of claims 3 to 6, said bituminous composition being transported and/or stored and/or handled in the form of blocks or pellets of bituminous composition which are solid at ambient temperature.

13. A process for manufacturing bituminous surfacing mixes or bituminous concretes comprising at least one bituminous composition and aggregates, the bituminous composition being chosen from bituminous compositions which are solid under cold conditions and in divided form as claimed in any one of claims 3 to 6, this process comprising at least the steps of:
- heating the aggregates to a temperature ranging from 100°C to 180°C,
- mixing the aggregates with the bituminous composition in a tank such as a mixer or a mixing drum,
- obtaining surfacing mixes.

14. The use of a pitch with a penetrability at 25°C ranging from 0 to 20 1/10 mm and a ring and ball softening point (RBSP) ranging from 115°C to 175°C, it being understood that the penetrability is measured according to the standard EN 1426 and that the RBSP is measured according to the standard EN 1427, for increasing the modulus of a bituminous composition or for increasing the modulus of bituminous surfacing mixes or bituminous concretes.
